# EUROPEAN PATENT SPECIFICATION

(11) **EP 4 123 197 B1**
(45) Date of publication and mention of the grant of the patent: **23.07.2025**
(21) Application number: 21770572.2
(22) Date of filing: 11.03.2021
(51) Int. Cl.: F16H 7/08

(54) **CHAIN TENSIONER**
KETTENSPANNER
TENDEUR DE CHAÎNE

(30) Priority: 18.03.2020 JP 2020047556; 28.09.2020 JP 2020161854
(43) Date of publication of application: 25.01.2023
(73) Proprietor: NTN Corporation, Osaka-shi, Osaka 550-0003 (JP)
(72) Inventor: TAKANO, Takehiro, Iwata-shi, Shizuoka 438-8510 (JP); SONG, Yuanshuang, Iwata-shi, Shizuoka 438-8510 (JP); ONIMARU, Kouichi, Iwata-shi, Shizuoka 438-8510 (JP)
(74) Representative: Grünecker Patent- und Rechtsanwälte PartG mbB
(86) International application number: PCT/JP2021/009841
(87) International publication number: WO 2021/187317

(56) References cited:
- DE-A1- 19 929 668
- JP-A- 2001 165 251
- JP-A- 2008 014 383
- JP-A- 2014 077 465
- JP-U- S 596 650
- JP-Y2- S6 143 000
- US-A1- 2014 100 068
- US-A1- 2014 200 104

## Description

### TECHNICAL FIELD

The present invention relates to a chain tensioner used to maintain the tension in a chain.

### BACKGROUND ART

Chain transmission systems used in the engines of, e.g., automobiles include, e.g., a system that transmits the rotation of a crankshaft to a camshaft or camshafts; a system that transmits the rotation of a crankshaft to engine accessories such as an oil pump, a water pump and a supercharger; a system that transmits the rotation of a crankshaft to a balancer shaft; and a system that couples the intake and exhaust cams of a twin-cam engine to each other. Chain tensioners are used to keep the tension in the chains of such chain transmission systems within an appropriate range.

For example, the below-identified Patent Document 1 discloses a chain tensioner used for such a purpose. The chain tensioner of Patent Document 1 includes a tubular cylinder of which one axial end is a closed end and the other axial end is an open end; a plunger axially slidably inserted in the cylinder; a return spring biasing the plunger in the direction in which the plunger protrudes out of the cylinder; a pressure chamber surrounded by the cylinder and the plunger; a leakage gap defined between the outer periphery of the plunger and the inner periphery of the cylinder; an oil supply path through which oil supplied from outside the cylinder is introduced into the pressure chamber; and a check valve disposed at the end of the oil supply path close to the pressure chamber.

In the chain tensioner of Patent Document 1, when the tension in the chain increases during operation of the engine, due to this tension in the chain, the plunger moves in the direction in which the plunger is pushed into the cylinder (this direction is hereinafter referred to as the "push-in direction"), thereby absorbing the tension in the chain. At this time, since a damper force is generated by the viscous resistance of the oil flowing out of the pressure chamber through the leakage gap, the plunger moves slowly.

On the other hand, when the tension in the chain decreases during operation of the engine, due to the biasing force of the return spring, the plunger moves in the direction in which the plunger protrudes out of the cylinder (this direction is hereinafter referred to as the "protruding direction"), thereby absorbing any slack in the chain. At this time, since the check valve opens, and oil flows into the pressure chamber through the oil supply path, the plunger moves quickly.

The chain tensioner of Patent Document 1 further includes a relief valve for adjusting the pressure in the pressure chamber. Specifically, the cylinder includes a pressure release path extending from its inner to outer periphery, and a relief valve that opens when the pressure in the pressure chamber exceeds a predetermined pressure is mounted to the pressure release path. This relief valve prevents the damper force due to the leakage gap from becoming excessive in the high rotation range of the engine, and, as a result, it is possible to obtain an optimum damper force both in the low and high rotation ranges of the engine.

In order to reduce fuel consumption, increasingly smaller oil pumps are used in today's automobiles, and as a result. there is a growing need to reduce the amount of oil consumed by chain tensioners.

To answer this need, the applicant of the present application proposed, in the below-identified Patent Document 2, a chain tensioner that consumes a smaller amount of oil.

The chain tensioner of Patent Document 2 includes a tubular cylinder of which one axial end is a closed end and the other axial end is an open end; a tubular plunger axially slidably inserted in the cylinder, and having an open insertion end inserted in the cylinder, and a closed protruding end protruding out of the cylinder; a return spring biasing the plunger in the direction in which the plunger protrudes out of the cylinder; a partition wall (valve seat) that axially divides, the space surrounded by the cylinder and the plunger, into a pressure chamber and a reservoir chamber; a valve hole axially extending through the partition wall; a check valve that allows only movement of oil from the side of the valve hole close to the reservoir chamber to the side of the valve hole close to the pressure chamber; a leakage gap through which oil leaks from the pressure chamber when the plunger axially moves such that the volume of the pressure chamber decreases; and an oil supply path through which oil supplied from outside the cylinder is introduced into the reservoir chamber.

The oil supply path is connected to the end of the leakage gap on the outlet side thereof such that oil that has leaked from the pressure chamber through the leakage gap returns to the oil supply path.

In the chain tensioner of Patent Document 2, when the plunger moves in the push-in direction, and the volume of the pressure chamber decreases, oil leaks through the leak gap from the pressure chamber. At this time, since a portion of the oil that has leaked from the pressure chamber returns to the oil supply path, the amount of oil discharged from the chain tensioner to the outside is small. Therefore, it is possible to reduce the amount of oil consumed by the chain tensioner.

A chain tensioner according to the preamble of independent claim 1 is disclosed in US 2014/100068 A1.

### PRIOR ART DOCUMENT(S)

### Patent document(s)

Patent document 1: Japanese Unexamined Patent Application Publication No. 2004-176821
Patent document 2: Japanese Unexamined Patent Application Publication No. 2019-152285

### SUMMARY OF THE INVENTION

### PROBLEMS TO BE SOLVED BY THE INVENTION

The applicant of the present application discussed, among themselves, adding to the chain tensioner of Patent Document 2 a relief valve for adjusting the pressure in the pressure chamber, as with the chain tensioner of Patent Document 1.

Specifically, in the chain tensioner of Patent Document 2, the applicant considered forming, in the cylinder, a pressure release path extending from the inner to outer periphery of the cylinder; and mounting, to the pressure release path, a relief valve that opens when the pressure in the pressure chamber exceeds a predetermined pressure.

However, the chain tensioner of Patent Document 2 has a problem in that, if a pressure release path is formed which extends from the inner to outer periphery of the cylinder, and a relief valve is mounted to the pressure release path, the amount of oil consumed by the chain tensioner increases.

Specifically, if a relief valve is mounted to the pressure release path extending from the inner to outer periphery of the cylinder, when the relief valve opens, oil in the pressure chamber is discharged through the pressure release path to the outside of the cylinder. Therefore, in the high rotation range of the engine, the amount of oil discharged to the outside of the cylinder when the relief valve opens increases, and the amount of oil consumed by the chain tensioner increases.

It is an object of the present invention to provide a chain tensioner in which the optimum damper force can be obtained both in the low and high rotation ranges, and the oil consumption is small.

### MEANS FOR SOLVING THE PROBLEMS

In order to achieve the above object, the present invention, which is defined in independent claim 1, provides a chain tensioner comprising: a tubular cylinder of which one axial end is a closed end and the other axial end is an open end; a tubular plunger axially slidably inserted in the cylinder, and having an open insertion end inserted in the cylinder, and a closed protruding end protruding out of the cylinder; a partition wall that axially divides a space surrounded by the cylinder and the plunger into (i) a pressure chamber of which a volume changes as the plunge axially moves, and (ii) a reservoir chamber of which a volume remains unchanged even when the plunger axially moves; an oil supply path through which oil supplied from outside the cylinder is introduced into the reservoir chamber; a first through hole axially extending through the partition wall; a check valve that allows only movement of oil from a side of the first through hole close to the reservoir chamber to a side of the first through hole close to the pressure chamber; a leakage gap that allows leakage of oil from the pressure chamber when the plunger axially moves such that the volume of the pressure chamber decreases; and a return spring biasing the plunger in a direction in which the plunger protrudes out of the cylinder, wherein the oil supply path is connected to an outlet end of the leakage gap such that oil that has leaked from the pressure chamber through the leakage gap returns to the oil supply path, wherein the chain tensioner further comprises: a second through hole axially extending through the partition wall in parallel with the first through hole; and a relief valve disposed at the second through hole, and configured to release oil from the pressure chamber into the reservoir chamber when pressure in the pressure chamber exceeds a predetermined pressure.

With this arrangement, since a relief valve is provided which releases oil from the pressure chamber if the pressure in the pressure chamber exceeds a predetermined pressure, it is possible to prevent the damper force due to the leakage gap from becoming excessive in the high rotation range of the engine. As a result, it is possible to obtain an optimum damper force both in the low and high rotation ranges of the engine.

Also, since the outlet end of the leakage gap is connected to the oil supply path, oil that has leaked from the pressure chamber through the leakage gap when the plunger moves in the axial direction in which the volume of the pressure chamber decreases, returns to the oil supply path. Also, since the relief valve is disposed at the second through hole of the partition wall, which separates the pressure chamber from the reservoir chamber, when the relief valve opens, the oil flowing from the pressure chamber through the relief valve returns to the reservoir chamber. Therefore, it is possible to reduce the amount of oil consumed by the chain tensioner.

According to the present invention, the first through hole is formed at a position displaced from a center of the plunger to one of two opposite sides of the center of the plunger, and the second through hole is formed at a position displaced from the center of the plunger to the other of the two opposite sides of the center of the plunger.

Since the first through hole and the second through hole are displaced from the center of the plunger to the opposite sides of the center of the plunger, respectively, it is possible to ensure both the flow path area of the first through hole, and the flow path area of the second through hole. Therefore, by ensuring the flow rate when the check valve opens, the chain tensioner can absorb slack in the chain quickly. Also, by ensuring the flow rate of oil when the relief valve opens, it is possible to effectively hinder the tension in the chain from becoming excessive in the high rotation range of the engine.

It is preferable that the second through hole is a stepped hole directly formed in the partition wall, and having a larger diameter on a side of the pressure chamber, and a smaller diameter on a side of the reservoir chamber, and that the relief valve is retained in the second through hole by a second annular member inserted and fixed in position, in an end portion of the second through hole on the side of the pressure chamber.

With this arrangement, it is possible to reliably prevent falling off of the relief valve due to, e.g., vibrations of the plunger, or the pressure which the relief valve receives from the oil in the pressure chamber. Specifically, the relief valve is inserted, from the side of the pressure chamber, into the second through hole, which is a stepped hole having a large diameter on the side of the pressure chamber, and a small diameter on the side of the reservoir chamber. Since the direction of the pressure applied to the relief valve from the oil in the pressure chamber is the same as the direction in which the relief valve is inserted into the second through hole (stepped hole), it is possible to reliably prevent falling off of the relief valve from the second through hole due to. e.g., vibrations of the plunger, or the pressure which the relief valve receives from the oil in the pressure chamber.

In this case, it is preferable that the first through hole is a stepped hole directly formed in the partition wall, and having a larger diameter on the side of the pressure chamber, and a smaller diameter on the side of the reservoir chamber, and that the check valve is retained in the first through hole by a first annular member inserted and fixed in position, in an end portion of the first through hole on the side of the pressure chamber.

With this arrangement, since, when mounting the check valve and the relief valve to the partition wall, the direction in which the check valve is inserted into the first through hole, and the direction in which the relief valve is inserted into the second through hole are the same direction, it is not necessary to change the direction of the partition wall when mounting the check valve and the relief valve to the partition wall. Therefore, it is possible to assemble the chain tensioner easily/efficiently.

The following arrangement may be used: the second through hole includes: a second small-diameter portion having a constant inner diameter, and extending from an end surface of the partition wall on the side of the reservoir chamber toward the pressure chamber; a second step radially expanding from the second small-diameter portion toward the pressure chamber; and a second large-diameter portion extending from the second step toward the pressure chamber, and having an inner diameter larger than the inner diameter of the second small-diameter portion, the relief valve includes: a second valve element movable between (i) a closed position where the second valve element is in contact with the second annular member and (ii) an open position where the second valve element has been moved from the closed position toward the reservoir chamber; and a second valve spring biasing the second valve element from the side of the reservoir chamber toward the pressure chamber, and an end of the second valve spring close to the reservoir chamber is supported by the second step.

With this arrangement, since the second annular member functions as a valve seat of the relief valve (member on which the second valve element is seated), and the second step of the second through hole functions as a valve retainer of the relief valve (member retaining the second valve element and the second valve spring), it is possible to minimize the number of components constituting the relief valve.

The following arrangement may be used: the second through hole includes: a second small-diameter portion having a constant inner diameter, and extending from an end surface of the partition wall on the side of the reservoir chamber toward the pressure chamber; a second step radially expanding from the second small-diameter portion toward the pressure chamber; and a second large-diameter portion extending from the second step toward the pressure chamber, and having an inner diameter larger than the inner diameter of the second small-diameter portion, the relief valve includes: an annular second valve seat; a second valve element movable between (i) a closed position where the second valve element is in contact with the annular second valve seat and (ii) an open position where the second valve element has been moved from the closed position toward the reservoir chamber; a second valve spring biasing the second valve element from the side of the reservoir chamber toward the pressure chamber; and a valve sleeve retaining, as a single assembly, the second valve seat, the second valve element, and the second valve spring, and the valve sleeve is inserted in the second large-diameter portion, while retaining, as a single assembly, the second valve seat, the second valve element, and the second valve spring, and the valve sleeve is prevented from being pulled out of the second large-diameter portion by the second annular member.

With this arrangement, since the relief valve includes a valve sleeve retaining, as a single assembly, the second valve seat, the second valve element, and the second valve spring, it is possible to first assemble, as a single assembly, the components constituting the relief valve before mounting the relief valve into the second through hole, and then to mount the single assembly into the second through hole.

If the check valve includes: a first valve element configured to open and close the first through hole from a side of the pressure chamber; and a first seat surface on which the first valve element is configured to be seated to close the first through hole, and the relief valve includes: a second valve element configured to open and close the second through hole from a side of the reservoir chamber; and a second seat surface on which the second valve element is configured to be seated to close the second through hole, an integral member formed with the first seat surface and the second seat surface is preferably used as the partition wall.

With this arrangement, since the first seat surface of the check valve and the second seat surface of the relief valve are formed on a common integral member, it is possible to reduce the manufacturing cost of the check valve and the relief valve.

The partition wall may be formed of a resin or a sintered alloy.

It is preferable that the first valve element has a spherical shape, and the second valve element has a spherical shape.

With this arrangement, the opening and closing actions of both of the check valve and the relief valve become stable and reliable.

The following arrangement may be used: the first seat surface is formed on a peripheral edge of an end opening of the first through hole on the side of the pressure chamber, the check valve further includes: a first valve retainer retaining the first valve element so as to be movable between (i) a closed position where the first valve element is seated on the first seat surface, and (ii) an open position where the first valve element is separated from the first seat surface by moving from the closed position toward the pressure chamber; and a first valve spring biasing the first valve element from the open position toward the closed position, the first valve retainer comprises: a first flange portion supported by an axial end surface of the partition wall on the side of the pressure chamber; a first tubular portion which axially extends from the first flange portion toward the pressure chamber, and in which the first valve element is axially movably received; and a first end plate disposed at an axial end of the first tubular portion on the side of the pressure chamber, and supporting the first valve spring, the second seat surface is formed on a peripheral edge of an end opening of the second through hole on the side of the reservoir chamber, the relief valve further includes: a second valve retainer retaining the second valve element so as to be movable between (i) a closed position where the second valve element is seated on the second seat surface, and (ii) an open position where the second valve element is separated from the second seat surface by moving from the closed position toward the reservoir chamber; and a second valve spring biasing the second valve element from the open position toward the closed position, and the second valve retainer comprises: a second flange portion supported by an axial end surface of the partition wall on the side of the reservoir chamber; a second tubular portion which axially extends from the second flange portion toward the reservoir chamber, and in which the second valve element is axially movably received; and a second end plate disposed at an axial end of the second tubular portion on the side of the reservoir chamber, and supporting the second valve spring.

With this arrangement, since the first valve element of the check valve is configured to open and close the opening of the first through hole at its end on the side of the pressure chamber, it is possible to easily ensure the flow path area of the first through hole when the check valve opens. Also, since the second valve element of the relief valve is configured to open and close the opening of the second through hole at its end on the side of the reservoir chamber, it is possible to easily ensure the flow path area of the second through hole when the relief valve opens. Therefore, it is possible to increase both of the flow rate of oil when the check valve opens, and the flow rate of oil when the relief valve opens.

The following arrangement may be used: the first seat surface is formed on an inner periphery of the first through hole, the first valve element is received in the first through hole so as to be axially movable between (i) a closed position where the first valve element is seated on the first seat surface, and (ii) an open position where the first valve element is separated from the first seat surface by moving from the closed position toward the pressure chamber, a first valve spring is disposed in the first through hole, and biases the first valve element from the open position toward the closed position, a first spring supporting member is disposed in an end opening of the first through hole on the side of the pressure chamber, to support the first valve spring, the second seat surface is formed on an inner periphery of the second through hole, the second valve element is received in the second through hole so as to be axially movable between (i) a closed position where the second valve element is seated on the second seat surface, and (ii) a second opened valve position where the second valve element is separated from the second seat surface by moving from the closed position toward the reservoir chamber, a second valve spring is disposed in the second through hole, and biases the second valve element from the open position toward the closed position, and a second spring supporting member is disposed in an end opening of the second through hole on the side of the reservoir chamber, to support the second valve spring.

With this arrangement, since the first valve element and the first valve spring, which constitute the check valve, are received inside of the first through hole of the partition wall, and the second valve element and the second valve spring, which constitute the relief valve, are received inside of the second through hole of the partition wall, the axial dimensions of the check valve and the relief valve are short. Therefore, the size of the chain tensioner is small.

The following arrangement may be used: the partition wall is fixed to the plunger so as to axially move in unison with the plunger, the leakage gap is a first gap portion which is, of an annular gap defined between an outer periphery of the plunger and an inner periphery of the cylinder, an end portion close to the insertion end of the plunger, the chain tensioner further comprises: an enlarged gap portion which is a portion of the annular gap on a side of the first gap portion remote from the insertion end of the plunger, the enlarged gap portion having a gap dimension larger than a gap dimension of the first gap portion; and a second gap portion which is a portion of the annular gap on a side of the enlarged gap portion remote from the insertion end of the plunger, the second gap portion having a gap dimension smaller than the gap dimension of the enlarged gap portion, and the oil supply path comprises: a cylinder-side oil path portion formed in the cylinder such that oil supplied from outside the cylinder is introduced into the enlarged gap portion through the cylinder-side oil path portion; and a plunger-side oil path portion extending through the tubular plunger from the outer periphery of the plunger to an inner periphery of the plunger such that the enlarged gap portion and the reservoir chamber communicate with each other via the plunger-side oil path portion.

With this arrangement, even when the axial position of the plunger relative to the cylinder changes, the cylinder-side oil path portion and the plunger-side oil path portion can be kept in communication with each other via the enlarged gap portion. Also, the oil that has leaked from the pressure chamber through the first gap portion (leakage gap) between the outer periphery of the plunger and the inner periphery of the cylinder can be returned to the oil supply path (enlarged gap portion).

It is preferable that the plunger has: a cylindrical first large-diameter radially outer surface on an end portion of the outer periphery of the plunger close to the insertion end of the plunger; a small-diameter radially outer surface on a portion of the outer periphery of the plunger on a side of the first large-diameter radially outer surface remote from the insertion end of the plunger, the small-diameter radially outer surface having an outer diameter dimension smaller than an outer diameter dimension of the first large-diameter radially outer surface; and a second large-diameter radially outer surface on a portion of the outer periphery of the plunger on a side of the small-diameter radially outer surface remote from the insertion end of the plunger, the second large-diameter radially outer surface having an outer diameter dimension equal to the outer diameter dimension of the first large-diameter radially outer surface, the first gap portion is defined between the first large-diameter radially outer surface and the inner periphery of the cylinder, the enlarged gap portion is defined between the small-diameter radially outer surface and the inner periphery of the cylinder, and the second gap portion is defined between the second large-diameter radially outer surface and the inner periphery of the cylinder.

With this arrangement, even when the plunger axially moves relative to the cylinder, the axial length of the leakage gap does not change, i.e., kept constant, thus making it possible to obtain a stable damper force.

It is preferable that the cylinder-side oil path portion has an oil outlet open to the inner periphery of the cylinder, and the cylinder has, in the inner periphery of the cylinder, a circumferential groove arranged such that the oil outlet is entirely located within a range of the circumferential groove.

With this arrangement, since the cylinder has, in its inner periphery, a circumferential groove such that the entire oil outlet of the cylinder-side oil path portion is located within the range of the circumferential groove, even if, when forming the cylinder-side oil path portion in the cylinder, burrs occur on the oil outlet of the cylinder-side oil path portion, which is open to the inner periphery of the cylinder, such burrs are prevented from interfering with the first and second large-diameter radially outer surfaces on the outer periphery of the plunger. Therefore, the plunger behaves stably.

### EFFECTS OF THE INVENTION

Since the chain tensioner of the present invention is provided with a relief valve which releases oil from the pressure chamber when the pressure in the pressure chamber exceeds a predetermined pressure, it is possible to prevent the damper force due to the leakage gap from becoming excessive in the high rotation range of the engine, and to obtain an optimum damper force both in the low and high rotation ranges of the engine. Also, since the outlet end of the leakage gap is connected to the oil supply path, when the plunger axially moves such that the volume of the pressure chamber decreases, the oil that has leaked from the pressure chamber through the leakage gap returns to the oil supply path. Also, since the relief valve is disposed at the second through hole of the partition wall, which separates the pressure chamber from the reservoir chamber, the oil flowing from the pressure chamber through the relief valve when the relief valve opens returns to the reservoir chamber. Therefore, the amount of oil consumed by the chain tensioner is small.

### BRIEF DESCRIPTION OF THE DRAWINGS

Fig. 1 is a view of a chain transmission system in which a chain tensioner according to a first embodiment of the present invention is used.
Fig. 2 is an enlarged sectional view illustrating the chain tensioner of Fig. 1 and the vicinity thereof.
Fig. 3 is a sectional view taken along line III-III of Fig. 2.
Fig. 4 is an enlarged sectional view illustrating a partition wall and the vicinity thereof when the relief valve of Fig. 2 is open.
Fig. 5 corresponds to Fig. 2, and shows a chain tensioner according a second embodiment of the present invention.
Fig. 6 is a sectional view taken along line VI-VI of Fig. 5.
Fig. 7 is an enlarged sectional view illustrating a partition wall and the vicinity thereof when the relief valve of Fig. 6 is open.
Fig. 8 corresponds to Fig. 4, and shows a chain tensioner according a third embodiment of the present invention.
Fig. 9 is a view illustrating a variation of the return spring of Fig. 8.
Fig. 10 is a view illustrating a variation of the first annular member of Fig. 9.
Fig. 11 is a view of a relief valve taken out of a chain tensioner according to a fourth embodiment of the present invention.
Fig. 12 corresponds to Fig. 4, and shows the chain tensioner according the fourth embodiment.

### BEST MODE FOR CARRYING OUT THE INVENTION

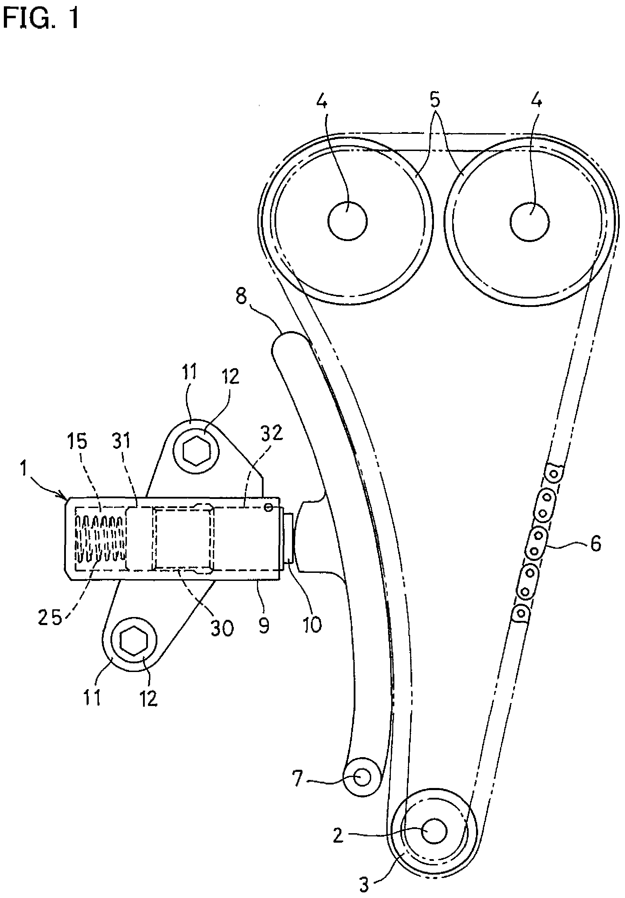

Fig. 1 illustrates a chain transmission system in which a chain tensioner 1 according to the first embodiment of the present invention is used. This chain transmission system includes a sprocket 3 fixed to the crankshaft 2 of an engine; sprockets 5 fixed to respective camshafts 4; and a chain 6 coupling the sprocket 3 to the sprockets 5. The rotation of the crankshaft 2 is transmitted to the camshafts 4 by the chain 6 so as to rotate the camshafts 4, thereby opening and closing the valves (not shown) of the combustion chambers of the engine.

While the engine is running, the crankshaft 2 always rotates in the same direction (clockwise direction in Fig. 1), and the side of the chain 6 moving toward the sprocket 3 (right side in Fig. 1) becomes a tight side, whereas, the side of the chain 6 moving away from the sprocket 3 (left side in Fig. 1) becomes a slack side. A chain guide 8 supported for pivotal motion about a pivot shaft 7 is in contact with the slack side of the chain 6. The chain tensioner 1 presses the chain 6 via the chain guide 8.

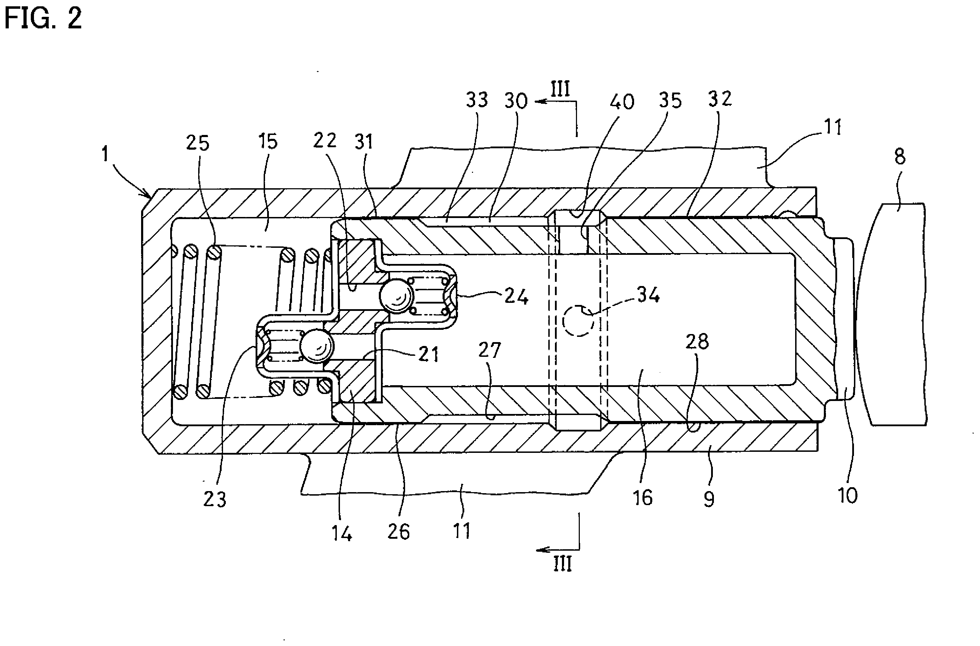

As illustrated in Fig. 2, the chain tensioner 1 includes a tubular cylinder 9 of which one axial end is a closed end and the other axial end is an open end; and a plunger 10 axially slidably inserted in the cylinder 9. The plunger 10 has a protruding end protruding out of the cylinder 9, and pressing the chain guide 8.

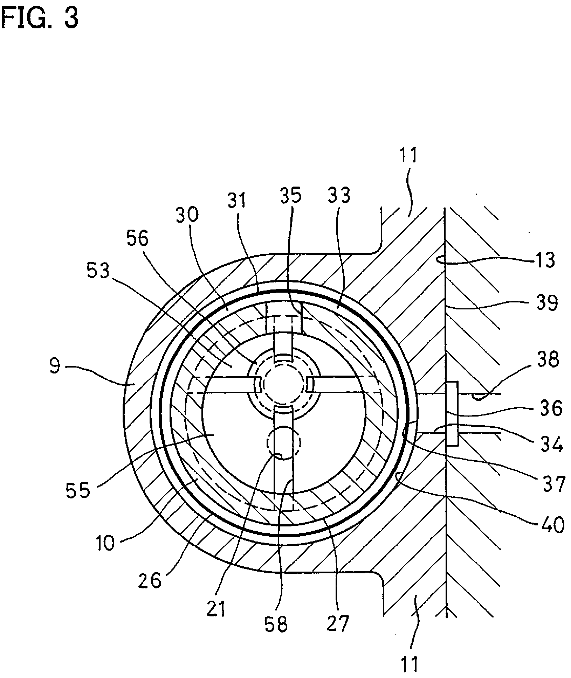

The cylinder 9 is integrally formed of a metal (such as an aluminum alloy). A plurality of attachment pieces 11 are integrally formed on the outer periphery of the cylinder 9. By inserting bolts 12 (see Fig. 1) through the respective attachment pieces 11, and tightening the bolts 12, the cylinder 9 is fixed to an engine wall surface 13 (see Fig. 3).

The plunger 10 is a tubular member having an open insertion end inserted in the cylinder 9, and a closed protruding end protruding out of the cylinder 9. The plunger 10 is made of an iron-based material (e.g., steel such as SCM (chrome molybdenum steel) or SCr (chrome steel)).

A partition wall14 is disposed on the inner periphery of the portion of the plunger 10 inserted in the cylinder 9. The partition wall 14 axially divides the space surrounded by the cylinder 9 and the plunger 10 into (i) a pressure chamber 15 of which the volume changes as the plunge 10 axially moves, and (ii) a reservoir chamber 16 of which the volume does not change even when the plunger 10 axially moves. When the plunger 10 axially moves in the direction in which the plunger protrudes out of the cylinder 9, the volume of the pressure chamber 15 increases. When the plunger 10 axially moves in the direction in which the plunger is pushed into the cylinder 9, the volume of the pressure chamber 15 decreases.

The partition wall 14 is fixed to the plunger 10 so as to axially move in unison with the plunger 10. The pressure chamber 15 is, of the space surrounded by the cylinder 9 and the plunger 10, the area between the partition wall 14 and the closed end of the cylinder 9. The reservoir chamber 16 is, of the space surrounded by the cylinder 9 and the plunger 10, the area between the partition wall 14 and the protruding end of the plunger 10.

The partition wall 14 is formed with a first through hole 21 axially extending through the partition wall 14, and a second through hole 22 axially extending through the partition wall 14 in parallel with the first through hole 21. The first through hole 21 has a round cross section, and axially extends with its center displaced from the center of the plunger 10 to one side (lower side in the example shown). The second through hole 22 has a round cross section, and axially extends with its center displaced from the center of the plunger 10 to the other side thereof (upper side in the example shown). The partition wall 14 can be formed of a resin or a sintered alloy.

A check valve 23 is disposed at the end of the first through hole 21 close to the pressure chamber 15 so as to restrict the movement of oil from the side of the first through hole 21 close to the pressure chamber 15 toward the side of the first through hole 21 close to the reservoir chamber 16, while allowing only the movement of oil from the side of the first through hole 21 close to the reservoir chamber 16 toward the side of the first through hole 21 close to the pressure chamber 15. A relief valve 24 is disposed at the end of the second through hole 22 close to the reservoir chamber 16 so as to release oil from the pressure chamber 15 into the reservoir chamber 16 when the pressure in the pressure chamber 15 exceeds a predetermined pressure.

A return spring 25 is mounted in the pressure chamber 15. The return spring 25 is a compression coil spring formed by a helically winding a wire material made of metal. One end of the return spring 25 is supported by the closed end of the cylinder 9, and the other end axially presses the plunger 10 via the partition wall 14, thereby biasing the plunger 10 in the direction in which the plunger 10 protrudes out of the cylinder 9.

The plunger 10 has, on its outer periphery, and, from the side close to the insertion end of the plunger 10 (left side in Fig. 2) toward the side remote from the insertion end (right side in Fig. 2), a first large-diameter radially outer surface 26, a small-diameter radially outer surface 27, and a second large-diameter radially outer surface 28. The first large-diameter radially outer surface 26 is a cylindrical radially outer surface formed on a portion of the outer periphery of the plunger 10 close to the insertion end of the plunger 10. The small-diameter radially outer surface 27 is a radially outer surface (i) which is formed on the portion of the outer periphery of the plunger 10 adjacent to the side of the first large-diameter radially outer surface 26 remote from the insertion end of the plunger 10, and (ii) which has an outer diameter dimension smaller than that of the first large-diameter radially outer surface 26. The second large-diameter radially outer surface 28 is a cylindrical radially outer surface (i) which is formed on the portion of the outer periphery of the plunger 10 adjacent to the side of the small-diameter radially outer surface 27 remote from the insertion end of the plunger 10, and (ii) which has the same outer diameter dimension as the first large-diameter radially outer surface 26. In other words, the first large-diameter radially outer surface 26 and the second large-diameter radially outer surface 28 are cylindrical surfaces machined in a single step.

An annular gap is present between the outer periphery of the plunger 10 and the inner periphery of the cylinder 9, and the annular gap includes a first gap portion 31 defined between the first large-diameter radially outer surface 26 of the plunger 10 and the inner periphery of the cylinder 9. The first gap portion 31 is an end portion of the annular gap close to the insertion end of the plunger 10. The first gap portion 31 constitutes a leakage gap through which oil leaks from the pressure chamber 15 when the plunger 10 axially moves such that the volume of the pressure chamber 15 decreases. The first gap portion 31 (leakage gap) is a gap whose cross-sectional shape perpendicular to the center axis is constant, i.e., does not change, in the axial direction, for example, a cylindrical gap. In the embodiment, the first gap portion 31 is a cylindrical minute gap having a radial width within the range of 0.015 to 0.080 mm.

The annular gap between the outer periphery of the plunger 10 and the inner periphery of the cylinder 9 further includes an enlarged gap portion 30 defined between the small-diameter radially outer surface 27 of the plunger 10 and the inner periphery of the cylinder 9. The enlarged gap portion 30 is adjacent to the side of the first gap portion 31 remote from the insertion end of the plunger 10, and has a gap dimension larger than that of the first gap portion 31. The enlarged gap portion 30 has an axial length larger than the moving stroke of the plunger 10 when the chain 6 is stretched over time, for example, has an axial length of 10 mm or more.

The annular gap between the outer periphery of the plunger 10 and the inner periphery of the cylinder 9 further includes a second gap portion 32 defined between the second large-diameter radially outer surface 28 of the plunger 10 and the inner periphery of the cylinder 9. The second gap portion 32 is adjacent to the side of the enlarged gap portion 30 remote from the insertion end of the plunger 10, and has a gap dimension smaller than that of the enlarged gap portion 30. The second gap portion 32 is a cylindrical minute gap having a radial width within the range of 0.015 to 0.080 mm.

As illustrated in Figs. 2 and 3, the cylinder 9 and the plunger 10 are provided with an oil supply path 33 through which oil supplied from outside the cylinder 9 is introduced into the reservoir chamber 16. The oil supply path 33 is constituted by a cylinder-side oil path portion 34 formed in the cylinder 9 through which oil supplied from outside the cylinder 9 is introduced into the enlarged gap portion 30; and a plunger-side oil path portion 35 formed in the plunger 10 through which the enlarged gap portion 30 and the reservoir chamber 16 communicate with each other.

As illustrated in Fig. 3, the cylinder-side oil path portion 34 is a hole extending through the cylinder 9 from its outer periphery to its inner periphery. The cylinder-side oil path portion 34 has an oil inlet 36 open to the outer periphery of the cylinder 9, and an oil outlet 37 open to the inner periphery of the cylinder 9. The oil inlet 36 is open to a seat surface 39 on the outer periphery of the cylinder 9 so as to be connected to an oil hole 38 open to the engine wall surface 13. The seat surface 39 is an abutment surface configured to abut against the engine wall surface 13. The oil hole 38 is an oil supply hole through which oil sent out from an oil pump (not shown) is supplied to the chain tensioner 1.

As illustrated in Fig. 2, the cylinder 9 has a circumferential groove 40 in its inner periphery. The circumferential groove 40 is disposed at the position of the oil outlet 37 of the cylinder-side oil path portion 34 such that the entire oil outlet 37 is located within the range of the circumferential groove 40. The axial width of the circumferential groove 40 (i.e., the axial width of a portion of the cylinder 9 recessed from the cylindrical surface of the inner periphery of the cylinder 9) is 1.5 times or more and 3.0 times or less larger than the axial width dimension of the opening of the oil outlet 37.

The plunger-side oil path portion 35 is a hole extending through the tubular plunger 10 from its outer to inner periphery. The end of the plunger-side oil path portion 35 at the outer periphery of the plunger 10 is open within the range of the small-diameter radially outer surface 27 of the plunger 10.

The enlarged gap portion 30 of the annular gap constitutes the oil supply path 33, and is connected to the outlet end of the first gap portion 31 (leakage gap). Thus, the oil that has leaked from the pressure chamber 15 through the first gap portion 31 (leakage gap) flows/returns to the oil supply path 33 (enlarged gap portion 30).

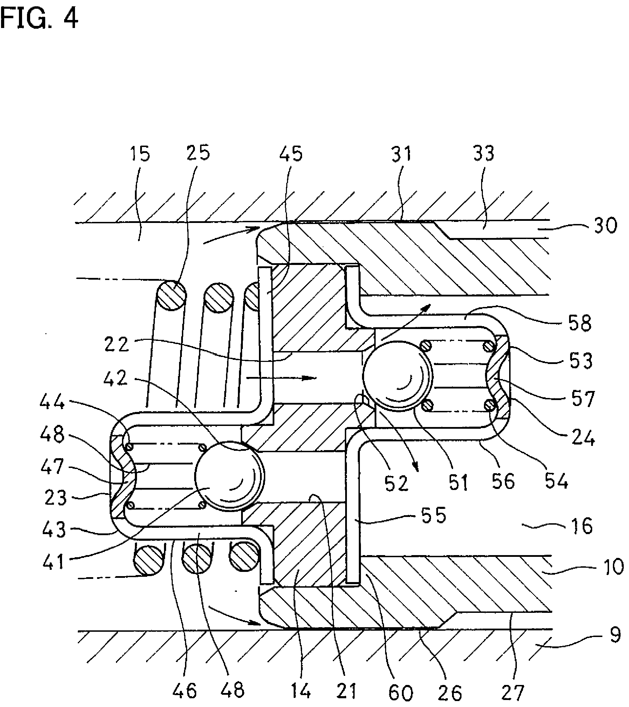

As illustrated in Fig. 4, the check valve 23 includes a first valve element 41 configured to open and close the first through hole 21 from the side of the pressure chamber 15; a first seat surface 42 on which the first valve element 41 is configured to be seated to close the first through hole 21; a first valve retainer 43 retaining the first valve element 41 so as to be movable between a closed position where the first valve element 41 is seated on the first seat surface 42, and an open position where the first valve element 41 is separated from the first seat surface 42 by moving from the closed position toward the pressure chamber 15; and a first valve spring 44 biasing the first valve element 41 from the open position toward the closed position.

Similarly, the relief valve 24 includes a second valve element 51 configured to open and close the second through hole 22 from the side of the reservoir chamber 16; a second seat surface 52 on which the second valve element 51 is configured to be seated to close the second through hole 22; a second valve retainer 53 retaining the second valve element 51 so as to be movable between a closed position where the second valve element 51 is seated on the second seat surface 52, and an open position where the second valve element 51 is separated from the second seat surface 52 by moving from the closed position toward the reservoir chamber 16; and a second valve spring 54 biasing the second valve element 51 from the open position toward the closed position.

The second valve spring 54 is a compression coil spring formed by winding a wire material having a cross-sectional area larger than that of the wire material forming the first valve spring 44. The second valve spring 54 presses the second valve element 51 with a force larger than the force with which the first valve spring 44 presses the first valve element 41.

The first valve element 41 has a spherical shape. The first seat surface 42 is formed on the peripheral edge of the end opening of the first through hole 21 on the side of the pressure chamber 15. The first seat surface 42 is a tapered inner peripheral surface inclined in the radially expanding direction toward the pressure chamber 15. The first seat surface 42 may be an inner peripheral surface having a circular arc-shaped cross section.

As with the first valve element 41, the second valve element 51 also has a spherical shape. The second seat surface 52 is formed on the peripheral edge of the end opening of the second through hole 22 on the side of the reservoir chamber 16. The second seat surface 52 is a tapered inner peripheral surface inclined in the radially expanding direction toward the reservoir chamber 16. The second seat surface 52 may be an inner peripheral surface having a circular arc-shaped cross section.

The partition wall 14 is an integral plate-shaped member formed with the first seat surface 42 and the second seat surface 52. The outer periphery of the partition wall 14 is a cylindrical surface. The partition wall 14 is fitted to the inner periphery of the plunger 10, and axially positioned by a shoulder 60 formed on the inner periphery of the plunger 10 such that the diameter of the portion of the plunger 10 on the side of the protruding end of the plunger 10 (right side in Fig. 4) is smaller than the diameter of the portion of the plunger 10 on the side of the insertion end of the plunger 10 (left side in Fig. 14).

The first valve retainer 43 is constituted by a first flange portion 45 supported by the axial end surface of the partition wall 14 on the side of the pressure chamber 15; a first tubular portion 46 which axially extends from the first flange portion 45 into the pressure chamber 15, and in which the first valve element 41 is axially movably received; and a first end plate 47 disposed at the axial end of the first tubular portion 46 on the side of the pressure chamber 15, and supporting the first valve spring 44. The first flange portion 45 is fixed in position by being axially sandwiched between the return spring 25 and the partition wall 14. The first valve retainer 43 is formed with openings 48 for oil passage through which oil can pass from inside to outside of the first tubular portion 46 (in the example shown, the openings 48 are slits circumferentially dividing the first tubular portion 46 and the first flange portion 45).

The second valve retainer 53 is constituted by a second flange portion 55 supported by the axial end surface of the partition wall 14 on the side of the reservoir chamber 16; a second tubular portion 56 which axially extends from the second flange portion 55 into the reservoir chamber 16, and in which the second valve element 51 is axially movably received; and a second end plate 57 disposed at the axial end of the second tubular portion 56 on the side of the reservoir chamber 16, and supporting the second valve spring 54. The second flange portion 55 is fixed in position by being axially sandwiched between the partition wall 14 and the shoulder 60. The second valve retainer 53 is formed with openings 58 for oil passage through which oil can pass from inside to outside of the second tubular portion 56 (in the example shown, the openings 58 are slits circumferentially dividing the second tubular portion 56 and the second flange portion 55).

Next, an exemplary operation of this chain tensioner 1 is described.

When the tension in the chain 6 increases during operation of the engine, due to this tension in the chain 6, the plunger 10 moves in the direction in which the plunger 10 is pushed into the cylinder 9, thereby absorbing the tension in the chain 6. At this time, since the pressure in the pressure chamber 15 exceeds the pressure in the reservoir chamber 16, the check valve 23 is closed. Also, since the volume of the pressure chamber 15 decreases due to the above movement of the plunger 10, an amount of oil corresponding to the decreased volume of the pressure chamber leaks from the pressure chamber 15 into the enlarged gap portion 30 through the first gap portion 31 (leakage gap). At this time, a damper force is generated due to the viscous resistance of the oil flowing through the first gap portion 31 (leakage gap), thereby preventing flapping of the chain 6. The oil that has leaked from the pressure chamber 15 through the first gap portion 31 (leakage gap) returns to the enlarged gap portion 30 (oil supply path 33), and then partially (flows into the plunger-side oil path portion 35, partially returns to the cylinder-side oil path portion 34, and partially lubricates the sliding surfaces of the plunger 10 and the cylinder 9 by passing through the second gap portion 32.

On the other hand, when the tension in the chain 6 decreases during operation of the engine, due to the biasing force of the return spring 25, the plunger 10 moves in the protruding direction, thereby absorbing any slack in the chain 6. At this time, since the volume of the pressure chamber 15 increases due to the above movement of the plunger 10, the pressure in the pressure chamber 15 falls below the pressure in the reservoir chamber 16, and the check valve 23 opens. Therefore, oil flows from the reservoir chamber 16 into the pressure chamber 15 through the first through hole 21, so that the plunger 10 moves quickly. At this time, oil is introduced into the reservoir chamber 16 from the oil hole 38 (see Fig. 3), which is outside of the cylinder 9, through the oil supply path 33 (i.e., through its cylinder-side oil path portion 34, enlarged gap portion 30, and plunger-side oil path portion 35).

While the engine is operating in the high rotation range, since a high-frequency excitation force continuously acts on the plunger 10 from the chain 6, an excessive damper force tends to be generated by the oil flowing through the first gap portion 31 (leakage gap). At this time, due to a pressure rise in the pressure chamber 15, the relief valve 24 opens, thereby allowing oil to flow into the reservoir chamber 16 from the pressure chamber 15 through the second through hole 22. This reduces a rise in the pressure in the pressure chamber 15, thus preventing an excessive damper force from being generated. At this time, the oil that has flowed out of the pressure chamber 15 through the second through hole 22 returns to the reservoir chamber 16.

When the engine is stopped and then restarted, since the surface of oil in the oil hole 38 (see Fig. 3) is generally at a low level, it takes time until oil starts to be supplied to the chain tensioner 1 from the oil hole 38. During this period, i.e., from the restart of the engine until oil starts to be supplied from the oil hole 38, oil remaining beforehand in the reservoir chamber 16 flows into the pressure chamber 15 through the first through hole 21, thereby keeping the pressure chamber 15 filled with oil. Therefore, it is possible to generate a damper force right after restarting the engine, and thus to reduce flapping of the chain 6.

Since this chain tensioner 1 includes a relief valve 24 that releases oil from the pressure chamber 15 when the pressure in the pressure chamber 15 exceeds a predetermined pressure, it is possible to prevent the damper force due to the first gap portion 31 (leakage gap) from becoming excessive in the high rotation range of the engine, and thus to obtain an optimum damper force both in the low and high rotation ranges of the engine.

Also, in this chain tensioner 1, since the outlet end of the first gap portion 31 (leakage gap) is connected to the oil supply path 33 (enlarged gap portion 30), when the plunger 10 axially moves such that the volume of the pressure chamber 15 decreases, the oil that has leaked from the pressure chamber 15 through the first gap portion 31 (leakage gap) returns to the oil supply path 33. Also, since the relief valve 24 is disposed at the second through hole 22 of the partition wall 14, which separates the pressure chamber 15 from the reservoir chamber 16, when the relief valve 24 opens, the oil flowing out of the pressure chamber 15 through the relief valve 24 returns to the reservoir chamber 16. Therefore, this chain tensioner 1 consumes a smaller amount of oil.

Moreover, in this chain tensioner 1, since the first through hole 21 and the second through hole 22 are displaced from the center of the plunger 10 to the opposite sides of the center of the plunger 10, respectively, it is possible to ensure both the flow path area of the first through hole 21, and the flow path area of the second through hole 22. Therefore, by ensuring the flow rate of oil when the check valve 23 opens, the chain tensioner can absorb slack in the chain 6 quickly. Also, by ensuring the flow rate of oil when the relief valve 24 opens, it is possible to effectively reduce an excessive rise in tension in the chain 6 in the high rotation range of the engine.

Also, in this chain tensioner 1, since the first seat surface 42 of the check valve 23 and the second seat surface 52 of the relief valve 24 are formed on a common integral member (partition wall 14), the manufacturing cost of the check valve 23 and the relief valve 24 is low.

Also, in this chain tensioner 1, since the first valve element 41 has a spherical shape, and the second valve element 51 also has a spherical shape, when the check valve 23 and the relief valve 24 open and close, both of these valves behave stably and highly reliably.

Also, since this chain tensioner 1 is configured such that the first valve element 41 of the check valve 23 opens and closes the end opening of the first through hole 21 on the side of the pressure chamber 15, it is possible to easily ensure the flow path area of the first through hole 21 when the check valve 23 opens. Also, since this chain tensioner 1 is configured such that the second valve element 51 of the relief valve 24 opens and closes the end opening of the second through hole 22 on the side of the reservoir chamber 16, it is possible to easily ensure the flow path area of the second through hole 22 when the relief valve 24 opens. Therefore, it is possible to increase both of the flow rate of oil when the check valve 23 opens, and the flow rate of oil when the relief valve 24 opens.

Also, in this chain tensioner 1, even when the axial position of the plunger 10 relative to the cylinder 9 changes, the cylinder-side oil path portion 34 and the plunger-side oil path portion 35 can be kept in communication with each other via the enlarged gap portion 30. Also, the oil leaking from the pressure chamber 15 through the first gap portion 31 (leakage gap) between the outer periphery of the plunger 10 and the inner periphery of the cylinder 9 can be returned to the oil supply path 33 (enlarged gap portion 30).

Also, in this chain tensioner 1, since the plunger 10 has, on its outer periphery, and, from the side close to the insertion end of the plunger 10 toward the side remote from this insertion end, a first large-diameter radially outer surface 26, a small-diameter radially outer surface 27, and a second large-diameter radially outer surface 28, such that the first gap portion 31 between the first large-diameter radially outer surface 26 and the inner periphery of the cylinder 9 acts as the leakage gap, even when the plunger 10 axially moves relative to the cylinder 9, the axial length of the leakage gap remains unchanged, i.e., constant, thus making it possible to obtain a stable damper force.

Also, in this chain tensioner 1, since the cylinder 9 has, in its inner periphery, a circumferential groove 40 such that the entire oil outlet 37 of the cylinder-side oil path portion 34 is located within the range of the circumferential groove 40, even if, when forming the cylinder-side oil path portion 34 in the cylinder 9, burrs occur on the oil outlet 37 of the cylinder-side oil path portion 34, which is open to the inner periphery of the cylinder 9, such burrs are prevented from interfering with the first and second large-diameter radially outer surfaces 26 and 28 on the outer periphery of the plunger 10. This ensures stable behavior of the plunger 10.

A seal member may be disposed between the outer periphery of the plunger 10 and the inner periphery of the cylinder 9 so as to seal the second gap portion 32. For example, an annular seal member may be mounted in a seal groove (not shown) formed in the second large-diameter radially outer surface 28 on the outer periphery of the plunger 10, so as to come into sliding contact with the inner periphery of the cylinder 9. Such a sealing arrangement very effectively reduces the amount of oil consumed by the chain tensioner 1.

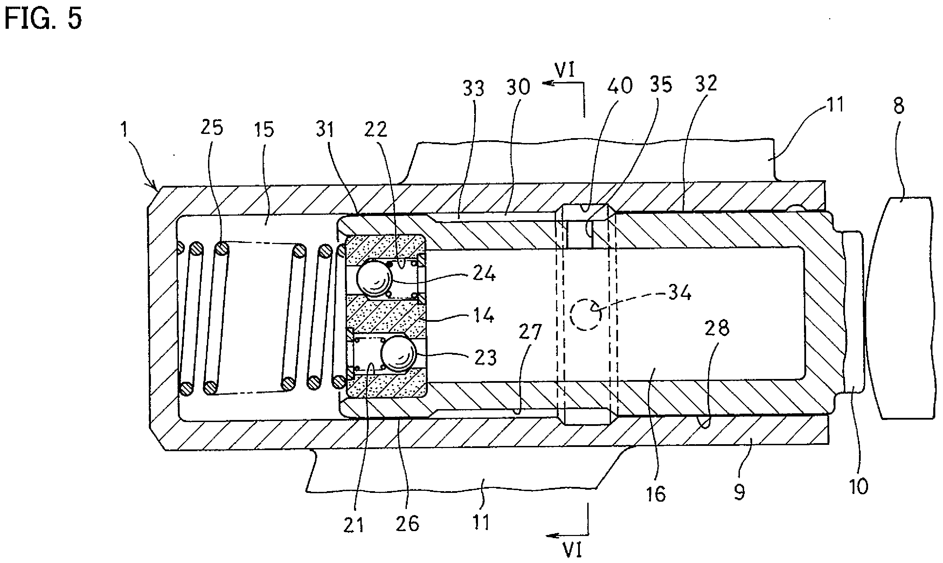

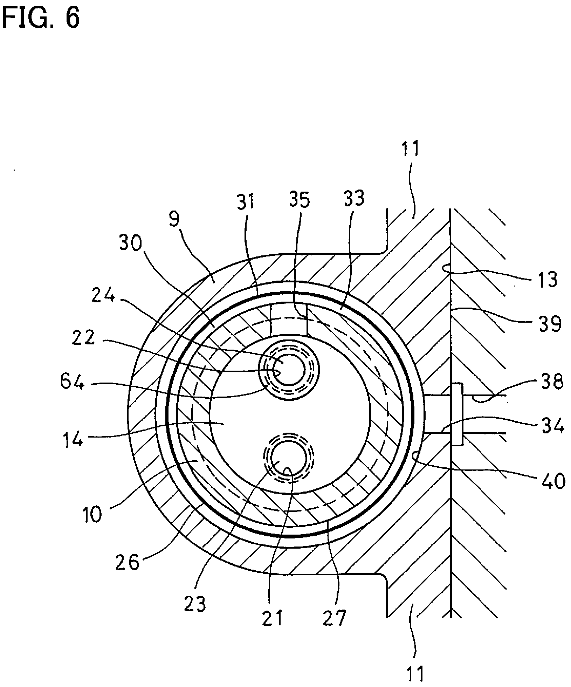

Figs. 5 to 7 illustrates a chain tensioner 1 according to the second embodiment of the present invention. The elements of the second embodiment corresponding to those of the first embodiment are denoted by the same reference numerals, and their description is omitted.

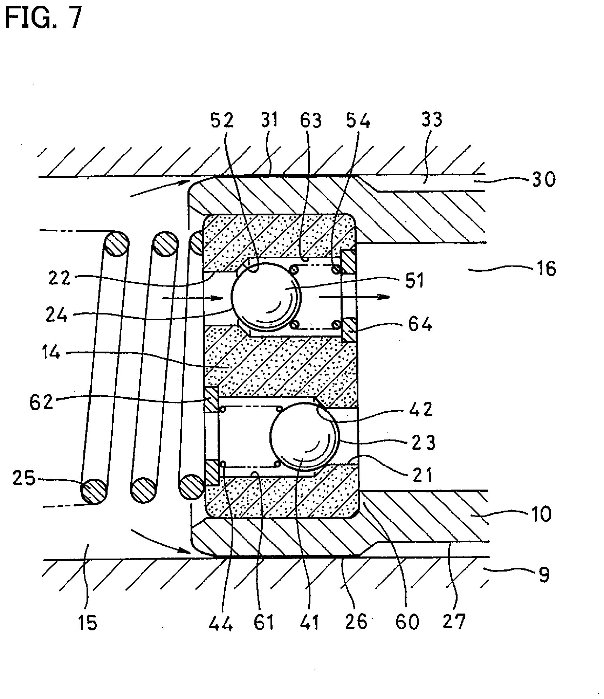

As illustrated in Fig. 7, the check valve 23 of this embodiment includes a first valve element 41 configured to open and close the first through hole 21 from the side of the pressure chamber 15; and a first seat surface 42 on which the first valve element 41 is configured to be seated to close the first through hole 21.

The first seat surface 42 is formed on the inner periphery of the first through hole 21. The first seat surface 42 is a tapered inner peripheral surface inclined in the radially expanding direction toward the pressure chamber 15. Also formed on the inner periphery of the first through hole 21 is a cylindrical inner peripheral surface 61 continuously extending from the first seat surface 42 toward the pressure chamber 15. The inner peripheral surface 61 has an axial length larger than the diameter of the first valve element 41. The first valve element 41 is received in the first through hole 21 so as to be axially movable between (i) a closed position where the first valve element 41 is seated on the first seat surface 42, and (ii) an open position where the first valve element 41 is separated from the first seat surface 42 by moving from the closed position toward the pressure chamber 15.

A first valve spring 44 is disposed in the first through hole 21 to bias the first valve element 41 from the open position toward the closed position. A first spring supporting member 62 is fixed to the end opening of the first through hole 21 on the side of the pressure chamber 15 to support the first valve spring 44. In the example shown, the first spring supporting member 62 is an annular member made of metal and fitted to the inner periphery of the first through hole 21 at its end.

Similarly, the relief valve 24 includes a second valve element 51 configured to open and close the second through hole 22 from the side of the reservoir chamber 16; and a second seat surface 52 on which the second valve element 51 is configured to be seated to close the second through hole 22.

The second seat surface 52 is formed on the inner periphery of the second through hole 22. The second seat surface 52 is a tapered inner peripheral surface inclined in the radially expanding direction toward the reservoir chamber 16. Also formed on the inner periphery of the second through hole 22 is a cylindrical inner peripheral surface 63 which continuously extends from the second seat surface 52 toward the reservoir chamber 16. The inner peripheral surface 63 has an axial length larger than the diameter of the second valve element 51. The second valve element 51 is received in the second through hole 22 so as to be axially movable between (i) a closed position where the second valve element 51 is seated on the second seat surface 52, and (ii) an open position where the second valve element 51 is separated from the second seat surface 52 by moving from the closed position toward the reservoir chamber 16.

A second valve spring 54 is disposed in the second through hole 22, and biases the second valve element 51 from the open position toward the closed position. A second spring supporting member 64 is fixed to the end opening of the second through hole 22 on the side of the reservoir chamber 16, to support the second valve spring 54. In the example shown, the second spring supporting member 64 is an annular member made of metal and fitted to the inner periphery of the second through hole 22 at its end.

The partition wall 14 is an integral plate-shaped member formed with the first seat surface 42 and the second seat surface 52. The outer periphery of the partition wall 14 is a cylindrical surface. The partition wall 14 is fitted to the inner periphery of the plunger 10, and axially positioned by a shoulder 60 formed on the inner periphery of the plunger 10.

In this chain tensioner 1, since the first valve element 41 and the first valve spring 44, which constitute the check valve 23, are received in the first through hole 21 of the partition wall 14, whereas the second valve element 51 and the second valve spring 54, which constitute the relief valve 24, are received in the second through hole 22 of the partition wall 14, the axial dimensions of the check valve 23 and the relief valve 24 are short. Therefore, the size of this chain tensioner 1 is small. Otherwise, this chain tensioner 1 is the same in its function and effects as the chain tensioner of the first embodiment.

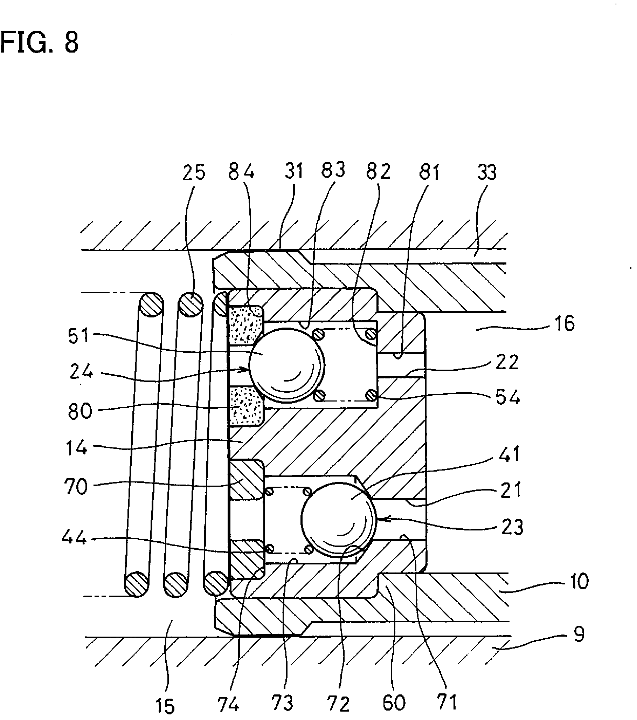

Fig. 8 illustrates a check valve 23 and a relief valve 24 of a chain tensioner 1 according to the third embodiment of the present invention, and the vicinity of these valves. The elements of the third embodiment corresponding to those of the first and second embodiments are denoted by the same reference numerals, and their description is omitted.

The check valve 23 is inserted in the first through hole 21, which is, in this embodiment, a stepped hole directly formed in the partition wall 14. The first through hole 21 is a stepped hole having a larger diameter on the side of the pressure chamber 15, and a smaller diameter on the side of the reservoir chamber 16. The check valve 23 is retained in the first through hole 21 by a first annular member 70 inserted and fixed in position in the end portion of the first through hole 21 on the side of the pressure chamber 15.

The first through hole 21 includes a first small-diameter portion 71 having a constant inner diameter, and extending from the end surface of the partition wall 14 on the side of the reservoir chamber 16 toward the pressure chamber 15; a first step 72 radially expanding from the first small-diameter portion 71 toward the pressure chamber 15; and a first large-diameter portion 73 extending from the first step 72 toward the pressure chamber 15, and having an inner diameter larger than the inner diameter of the first small-diameter portion 71. The end portion of the first large-diameter portion 73 on the side of the pressure chamber 15 is formed with a shoulder 74 axially supporting the end of the first annular member 70 on the side of the reservoir chamber 16.

The check valve 23 includes a first valve element 41 movable between (i) a closed position where the first valve element 41 is in contact with the first step 72 and (ii) an open position where the first valve element 41 has moved from the closed position toward the pressure chamber 15; and a first valve spring 44 biasing the first valve element 41 from the side of the pressure chamber 15 toward the reservoir chamber 16.

The first valve spring 44 is a coil spring disposed in, and coaxial with, the first large-diameter portion 73. The end of the first valve spring 44 close to the pressure chamber 15 is supported by the first annular member 70, while the end of the first valve spring 44 close to the reservoir chamber 16 presses the first valve element 41. The first annular member 70 is fixed to the partition wall14 by being inserted, with interference, into the end of the first through hole 21 on the side of the pressure chamber 15. The first annular member 70 is formed of a sintered alloy or a resin.

The members constituting the check valve 23, which are the first annular member 70, the first valve spring 44, and the first valve element 41, are arranged in this order from the side of the pressure chamber 15 toward the reservoir chamber 16. The first step 72 in the first through hole 21 constitutes a valve seat on which the first valve element 41 of the check valve 23 is configured to be seated.

The relief valve 24 is inserted in a second through hole 22 comprising a stepped hole directly formed in the partition wall 14. The second through hole 22 is a stepped hole having a larger diameter on the side of the pressure chamber 15, and a smaller diameter on the side of the reservoir chamber 16. The relief valve 24 is retained in the second through hole 22 by a second annular member 80 inserted and fixed in position, in the end portion of the second through hole 22 on the side of the pressure chamber 15.

The second through hole 22 includes a second small-diameter portion 81 having a constant inner diameter, and extending from the end surface of the partition wall 14 on the side of the reservoir chamber 16 toward the pressure chamber 15; a second step 82 radially expanding from the second small-diameter portion 81 toward the pressure chamber 15; and a second large-diameter portion 83 extending from the second step 82 toward the pressure chamber 15, and having an inner diameter larger than the inner diameter of the second small-diameter portion 81. The end portion of the second large-diameter portion 83 on the side of the pressure chamber 15 is formed with a shoulder 84 axially supporting the end of the second annular portion 80 on the side of the reservoir chamber 16. The second small-diameter portion 81 has an inner diameter smaller than the inner diameter of the first small-diameter portion 71.

The relief valve 24 includes a second valve element 51 movable between (i) a closed position where the second valve element 51 is in contact with the second annular member 80 and (ii) an open position where the second valve element 51 has moved from the closed position toward the reservoir chamber 16; and a second valve spring 54 biasing the second valve element 51 from the side of the reservoir chamber 16 toward the pressure chamber 15.

The second valve spring 54 is a coil spring disposed in, and coaxial with, the second large-diameter portion 83. The end of the second valve spring 54 close to the reservoir chamber 16 is supported by the second step 82, while the end of the second valve spring 54 close to the pressure chamber 15 presses the second valve element 51. The second annular member 80 is fixed to the partition wall 14 by being inserted, with interference, into the end of the second through hole 22 on the side of the pressure chamber 15. The second annular member 80 is formed of a sintered alloy.

The members constituting the relief valve 24, which are the second annular member 80, the second valve element 51, and the second valve spring 54, are arranged in this order from the side of the pressure chamber 15 toward the reservoir chamber 16. The second annular member 80 constitutes a valve seat on which the second valve element 51 of the relief valve 24 is configured to be seated. The second step 82 in the second through hole 22 constitutes a valve retainer retaining the second valve element 51 and the second valve spring 54.

The partition wall 14 is fitted to the inner periphery of the plunger 10 in a dimensional relationship where no interference exists. By setting no interference between the outer periphery of the partition wall 14 and the inner periphery of the plunger 10, it is possible to strictly control the size of the first gap portion 31 (leakage gap) with high dimensional accuracy. One end of the return spring 25 is in contact with the end of the partition wall 14 on the side of the pressure chamber 15. The partition wall 14 is pressed against a shoulder 60 on the inner periphery of the plunger 10 by the force which the partition wall 14 receives from the return spring 25.

In this chain tensioner 1, it is possible to reliably prevent falling off of the relief valve 24 due to, e.g., vibrations of the plunger 10, or the pressure which the relief valve 24 receives from the oil in the pressure chamber 15.

Specifically, the relief valve 24 is inserted, from the side of the pressure chamber 15, into the second through hole 22, which is a stepped hole having a larger diameter on the side of the pressure chamber 15, and a smaller diameter on the side of the reservoir chamber 16. Since the direction of the pressure applied to the relief valve 24 from the oil in the pressure chamber 15 is the same as the direction in which the relief valve 24 is inserted into the second through hole 22, which is a stepped hole, it is possible to reliably prevent falling off of the relief valve 24 from the second through hole 22 due to. e.g., vibrations of the plunger 10, or the pressure which the relief valve 24 receives from the oil in the pressure chamber 15.

Also, in this chain tensioner 1, since, when mounting the check valve 23 and the relief valve 24 to the partition wall 14, the direction in which the check valve 23 is inserted into the first through hole 21, and the direction in which the relief valve 24 is inserted into the second through hole 22 are the same direction (direction from the side of the pressure chamber 15 toward the reservoir chamber 16), it is not necessary to change the direction of the partition wall 14 when mounting the check valve 23 and the relief valve 24 to the partition wall 14. Therefore, it is possible to assemble the chain tensioner easily/efficiently.

Also, in this chain tensioner 1, since the second annular member 80 functions as a valve seat of the relief valve 24 (member on which the second valve element 51 is seated), and the second step 82 of the second through hole 22 functions as a valve retainer of the relief valve 24 (member retaining the second valve element 51 and the second valve spring 54), it is possible to minimize the number of components constituting the relief valve 24.

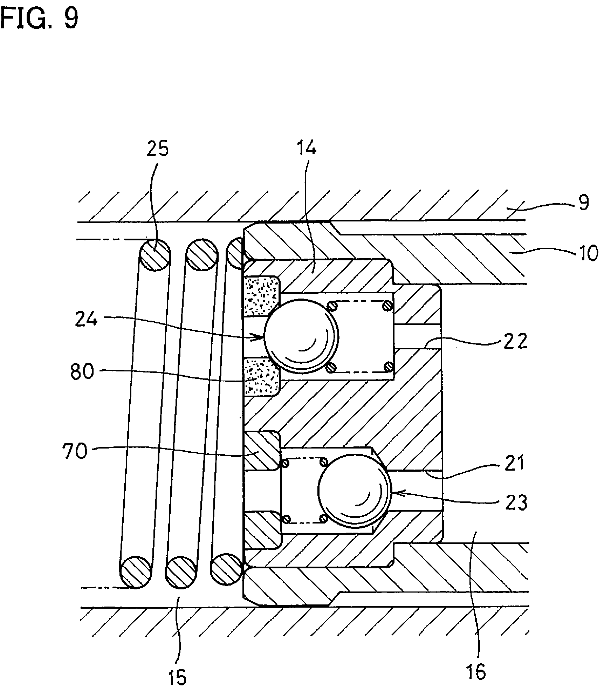

While, in each of the above embodiments, the coil diameter of the return spring 25 is set such that the return spring 25 comes into contact with only the partition wall 14 and not the plunger 10, the coil diameter of the return spring 25 may be increased such that, as illustrated in Fig. 9, the return spring 25 comes into contact with both the partition wall 14 and the plunger 10.

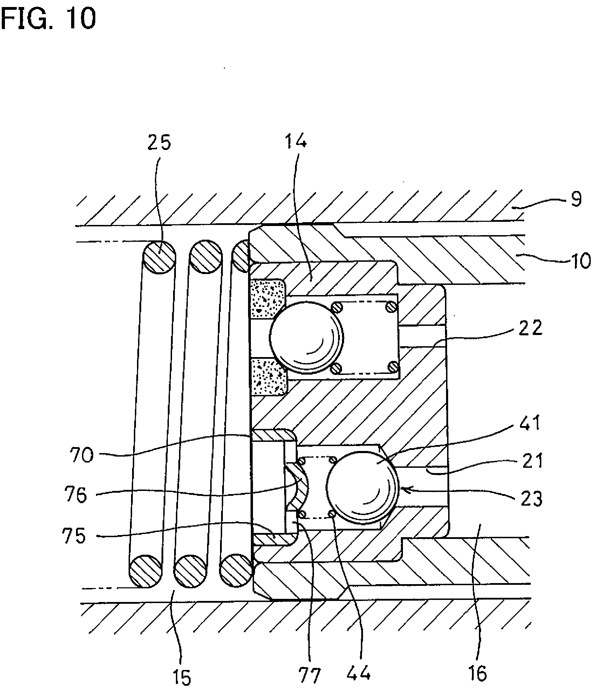

Also, while, in the above embodiment, a member formed of a sintered alloy or a resin is used as the first annular member 70, a metal plate may be used as the first annular member 70 as illustrated in Fig. 10. The first annular member 70 of Fig. 10 includes a cylindrical portion 75 fitted to the inner periphery of the first through hole 21 at its end on the side of the pressure chamber 15; an end plate portion 76 integral with the end of the cylindrical portion 75 close to the reservoir chamber 16; and holes 77 axially extending through the end plate portion 76.

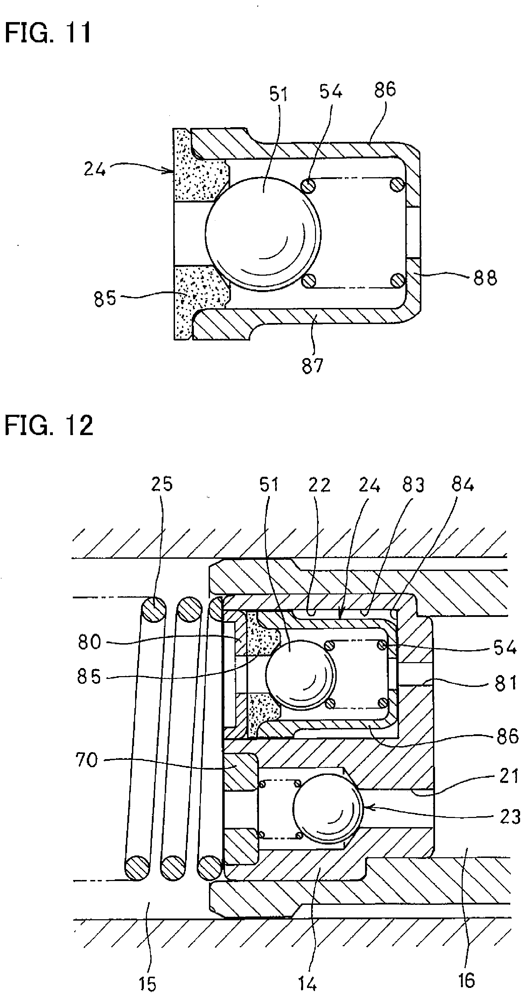

Figs. 11 and 12 illustrate the fourth embodiment of the present invention. The fourth embodiment is different from the third embodiment only in the structure of the relief valve 24, and otherwise the same in structure as the third embodiment. Therefore, only the features of the fourth embodiment different from those of the third embodiment are described below.

As illustrated in Fig. 12, a relief valve 24 is inserted in a second through hole 22 comprising a stepped hole directly formed in the partition wall 14. The second through hole 22 is a stepped hole having a larger diameter on the side of the pressure chamber 15, and a smaller diameter on the side of the reservoir chamber 16. The relief valve 24 is retained in the second through hole 22 by a second annular member 80 inserted and fixed in position, in the end portion of the second through hole 22 on the side of the pressure chamber 15.

As illustrated in Fig. 11, the relief valve 24 includes an annular second valve seat 85; a second valve element 51 movable between (i) a closed position where the second valve element 51 is in contact with the annular second valve seat 85 and (ii) an open position where the second valve element 51 has been moved from the closed position toward the reservoir chamber 16 (see Fig. 12) (to the right in Fig. 12); a second valve spring 54 biasing the second valve element 51 from the side of the reservoir chamber 16 (see Fig. 12) toward the pressure chamber 15; and a valve sleeve 86 retaining, as a single assembly, the second valve seat 85, the second valve element 51, and the second valve spring 54.

The valve sleeve 86 is a cup-shaped member including a tubular portion 87 surrounding the second valve element 51 and the second valve spring 54; and an inwardly extending flange portion 88 formed at one end of the tubular portion 87. The valve sleeve 86 can be formed of a metal or a resin. The inwardly extending flange portion 88 supports the second valve spring 54. The second valve seat 85 is press-fitted to the other end of the tubular portion 87. The second valve seat 85 is formed of a sintered alloy.

As illustrated in Fig. 12, the valve sleeve 86 is inserted in the second large-diameter portion 83, while retaining, as a single assembly, the second valve seat 85, the second valve element 51, and the second valve spring 54, and the valve sleeve 86 is prevented from being pulled out of the second large-diameter portion 83 by the second annular member 80. The second annular member 80 is fixedly press-fitted in the second through hole 22.

In the chain tensioner 1 of this embodiment, since the relief valve 24 includes a valve sleeve 86 retaining, as a single assembly, the second valve seat 85, the second valve element 51, and the second valve spring 54, it is possible to first assemble, as a single assembly, the components constituting the relief valve 24 before mounting the relief valve 24 into the second through hole 22, and then to mount the single assembly into the second through hole 22.

While, in each of the above embodiments, the chain tensioner 1 is used in a chain transmission system that transmits the rotation of a crankshaft 2 to camshafts 4, the chain tensioner 1 may be used in (i) a chain transmission system that transmits the rotation of a crankshaft 2 to engine accessories such as an oil pump, a water pump, and a supercharger; (ii) a chain transmission system that transmits the rotation of a crankshaft 2 to a balancer shaft; or (iii) a chain transmission system that couples the intake and exhaust cams of a twin-cam engine to each other.

### DESCRIPTION OF REFERENCE NUMERALS

1: Chain tensioner
9: Cylinder
10: Plunger
14: Partition wall
15: Pressure chamber
16: Reservoir chamber
21: First through hole
22: Second through hole
23: Check valve
24: Relief valve
25: Return spring
26: First large-diameter radially outer surface
27: Small-diameter radially outer surface
28: Second large-diameter radially outer surface
30: Enlarged gap portion
31: First gap portion (leakage gap)
32: Second gap portion
33: Oil supply path
34: Cylinder-side oil path portion
35: Plunger-side oil path portion
37: Oil outlet
40: Circumferential groove
41: First valve element
42: First seat surface
43: First valve retainer
44: First valve spring
45: First flange portion
46: First tubular portion
47: First end plate
51: Second valve element
52: Second seat surface
53: Second valve retainer
54: Second valve spring
55: Second flange portion
56: Second tubular portion
57: Second end plate
62: First spring supporting member
64: Second spring supporting member
70: First annular member
80: Second annular member
81: Second small-diameter portion
82: Second step
83: Second large-diameter portion
85: Second valve seat
86: Valve sleeve

## Claims

1. A chain tensioner comprising:
a tubular cylinder (9) of which one axial end is a closed end and the other axial end is an open end;
a tubular plunger (10) axially slidably inserted in the cylinder (9), and having an open insertion end inserted in the cylinder (9), and a closed protruding end protruding out of the cylinder (9);
a partition wall (14) that axially divides a space surrounded by the cylinder (9) and the plunger (10) into (i) a pressure chamber (15) of which a volume changes as the plunger (10) axially moves, and (ii) a reservoir chamber (16) of which a volume remains unchanged even when the plunger (10) axially moves;
an oil supply path (33) through which oil supplied from outside the cylinder (9) is introduced into the reservoir chamber (16);
a first through hole (21) axially extending through the partition wall (14);
a check valve (23) that allows only movement of oil from a side of the first through hole (21) close to the reservoir chamber (16) to a side of the first through hole (21) close to the pressure chamber (15);
a leakage gap that allows leakage of oil from the pressure chamber (15) when the plunger (10) axially moves such that the volume of the pressure chamber (15) decreases; and
a return spring (25) biasing the plunger (10) in a direction in which the plunger (10) protrudes out of the cylinder (9),
wherein the oil supply path (33) is connected to an outlet end of the leakage gap such that oil that has leaked from the pressure chamber (15) through the leakage gap returns to the oil supply path (33),
**characterized in that** the chain tensioner further comprises:
a second through hole (22) axially extending through the partition wall (14) in parallel with the first through hole (21); and
a relief valve (24) disposed at the second through hole (22), and configured to release oil from the pressure chamber (15) into the reservoir chamber (16) when pressure in the pressure chamber (15) exceeds a predetermined pressure,
wherein the first through hole (21) is formed at a position displaced from a center of the plunger (10) to one of two opposite sides of the center of the plunger (10), and
wherein the second through hole (22) is formed at a position displaced from the center of the plunger (10) to the other of the two opposite sides of the center of the plunger (10).

2. The chain tensioner according to claim 1, wherein the second through hole (22) is a stepped hole directly formed in the partition wall (14), and having a larger diameter on a side of the pressure chamber (15), and a smaller diameter on a side of the reservoir chamber (16), and
wherein the relief valve (24) is retained in the second through hole (22) by a second annular member (80) inserted and fixed in position, in an end portion of the second through hole (22) on the side of the pressure chamber (15).

3. The chain tensioner according to claim 2, wherein the first through hole (21) is a stepped hole directly formed in the partition wall (14), and having a larger diameter on the side of the pressure chamber (15), and a smaller diameter on the side of the reservoir chamber (16), and
wherein the check valve (23) is retained in the first through hole (21) by a first annular member (70) inserted and fixed in position, in an end portion of the first through hole (21) on the side of the pressure chamber (15).

4. The chain tensioner according to claim 2 or 3, wherein the second through hole (22) includes:
a second small-diameter portion (81) having a constant inner diameter, and extending from an end surface of the partition wall (14) on the side of the reservoir chamber (16) toward the pressure chamber (15);
a second step (82) radially expanding from the second small-diameter portion (81) toward the pressure chamber (15); and
a second large-diameter portion (83) extending from the second step (82) toward the pressure chamber (15), and having an inner diameter larger than the inner diameter of the second small-diameter portion (81),
wherein the relief valve (24) includes:
a second valve element (51) movable between (i) a closed position where the second valve element (51) is in contact with the second annular member (80) and (ii) an open position where the second valve element (51) has been moved from the closed position toward the reservoir chamber (16); and
a second valve spring (54) biasing the second valve element (51) from the side of the reservoir chamber (16) toward the pressure chamber (15), and
wherein an end of the second valve spring (54) close to the reservoir chamber (16) is supported by the second step (82).

5. The chain tensioner according to claim 2 or 3, wherein the second through hole (22) includes:
a second small-diameter portion (81) having a constant inner diameter, and extending from an end surface of the partition wall (14) on the side of the reservoir chamber (16) toward the pressure chamber (15);
a second step (82) radially expanding from the second small-diameter portion (81) toward the pressure chamber (15); and
a second large-diameter portion (83) extending from the second step (82) toward the pressure chamber (15), and having an inner diameter larger than the inner diameter of the second small-diameter portion (81),
wherein the relief valve (24) includes:
an annular second valve seat (85);
a second valve element (51) movable between (i) a closed position where the second valve element (51) is in contact with the annular second valve seat (85) and (ii) an open position where the second valve element (51) has been moved from the closed position toward the reservoir chamber (16);
a second valve spring (54) biasing the second valve element (51) from the side of the reservoir chamber (16) toward the pressure chamber (15); and
a valve sleeve (86) retaining, as a single assembly, the second valve seat (85), the second valve element (51), and the second valve spring (54), and
wherein the valve sleeve (86) is inserted in the second large-diameter portion (83), while retaining, as a single assembly, the second valve seat (85), the second valve element (51), and the second valve spring (54), and the valve sleeve (86) is prevented from being pulled out of the second large-diameter portion (83) by the second annular member (80).

6. The chain tensioner according to claim 1, wherein the check valve (23) includes:
a first valve element (41) configured to open and close the first through hole (21) from a side of the pressure chamber (15); and
a first seat surface (42) on which the first valve element (41) is configured to be seated to close the first through hole (21),
wherein the relief valve (24) includes:
a second valve element (51) configured to open and close the second through hole (22) from a side of the reservoir chamber (16); and
a second seat surface (52) on which the second valve element (51) is configured to be seated to close the second through hole (22), and
wherein the partition wall (14) is an integral member formed with the first seat surface (42) and the second seat surface (52).

7. The chain tensioner according to claim 6, wherein the partition wall (14) is formed of a resin or a sintered alloy.

8. The chain tensioner according to claim 6 or 7, wherein the first valve element (41) has a spherical shape, and the second valve element (51) has a spherical shape.

9. The chain tensioner according to any of claims 6 to 8, wherein the first seat surface (42) is formed on a peripheral edge of an end opening of the first through hole (21) on the side of the pressure chamber (15),
wherein the check valve (23) further includes:
a first valve retainer (43) retaining the first valve element (41) so as to be movable between (i) a closed position where the first valve element (41) is seated on the first seat surface (42), and (ii) an open position where the first valve element (41) is separated from the first seat surface (42) by moving from the closed position toward the pressure chamber (15); and
a first valve spring (44) biasing the first valve element (41) from the open position toward the closed position,
wherein the first valve retainer (43) comprises:
a first flange portion (45) supported by an axial end surface of the partition wall (14) on the side of the pressure chamber (15);
a first tubular portion (46) which axially extends from the first flange portion (45) toward the pressure chamber (15), and in which the first valve element (41) is axially movably received; and
a first end plate (47) disposed at an axial end of the first tubular portion (46) on the side of the pressure chamber (15), and supporting the first valve spring (44),
wherein the second seat surface (52) is formed on a peripheral edge of an end opening of the second through hole (22) on the side of the reservoir chamber (16),
wherein the relief valve (24) further includes:
a second valve retainer (53) retaining the second valve element (51) so as to be movable between (i) a closed position where the second valve element (51) is seated on the second seat surface (52), and (ii) an open position where the second valve element (51) is separated from the second seat surface (52) by moving from the closed position toward the reservoir chamber (16); and
a second valve spring (54) biasing the second valve element (51) from the open position toward the closed position, and
wherein the second valve retainer (53) comprises:
a second flange portion (55) supported by an axial end surface of the partition wall (14) on the side of the reservoir chamber (16);
a second tubular portion (56) which axially extends from the second flange portion (55) toward the reservoir chamber (16), and in which the second valve element (51) is axially movably received; and
a second end plate (57) disposed at an axial end of the second tubular portion (56) on the side of the reservoir chamber (16), and supporting the second valve spring (54).

10. The chain tensioner according to any of claims 6 to 8, wherein the first seat surface (42) is formed on an inner periphery of the first through hole (21),
wherein the first valve element (41) is received in the first through hole (21) so as to be axially movable between (i) a closed position where the first valve element (41) is seated on the first seat surface (42), and (ii) an open position where the first valve element (41) is separated from the first seat surface (42) by moving from the closed position toward the pressure chamber (15),
wherein a first valve spring (44) is disposed in the first through hole (21), and biases the first valve element (41) from the open position toward the closed position,
wherein a first spring supporting member (62) is disposed in an end opening of the first through hole (21) on the side of the pressure chamber (15), to support the first valve spring (44),
wherein the second seat surface (52) is formed on an inner periphery of the second through hole (22),
wherein the second valve element (51) is received in the second through hole (22) so as to be axially movable between (i) a closed position where the second valve element (51) is seated on the second seat surface (52), and (ii) a second opened valve position where the second valve element (51) is separated from the second seat surface (52) by moving from the closed position toward the reservoir chamber (16),
wherein a second valve spring (54) is disposed in the second through hole (22), and biases the second valve element (51) from the open position toward the closed position, and
wherein a second spring supporting member (64) is disposed in an end opening of the second through hole (22) on the side of the reservoir chamber (16), to support the second valve spring (54).

11. The chain tensioner according to any of claims 1 to 10, wherein the partition wall (14) is fixed to the plunger (10) so as to axially move in unison with the plunger (10),
wherein the leakage gap is a first gap portion (31) which is, of an annular gap defined between an outer periphery of the plunger (10) and an inner periphery of the cylinder (9), an end portion close to the insertion end of the plunger (10),
wherein the chain tensioner further comprises:
an enlarged gap portion (30) which is a portion of the annular gap on a side of the first gap portion (31) remote from the insertion end of the plunger (10), the enlarged gap portion (30) having a gap dimension larger than a gap dimension of the first gap portion (31); and
a second gap portion (32) which is a portion of the annular gap on a side of the enlarged gap portion (30) remote from the insertion end of the plunger (10), the second gap portion (32) having a gap dimension smaller than the gap dimension of the enlarged gap portion (30), and
wherein the oil supply path (33) comprises:
a cylinder-side oil path portion (34) formed in the cylinder (9) such that oil supplied from outside the cylinder (9) is introduced into the enlarged gap portion (30) through the cylinder-side oil path portion (34); and
a plunger-side oil path portion (35) extending through the tubular plunger (10) from the outer periphery of the plunger (10) to an inner periphery of the plunger (10) such that the enlarged gap portion (30) and the reservoir chamber (16) communicate with each other via the plunger-side oil path portion (35).

12. The chain tensioner according to claim 11, wherein the plunger (10) has:
a cylindrical first large-diameter radially outer surface (26) on an end portion of the outer periphery of the plunger (10) close to the insertion end of the plunger (10);
a small-diameter radially outer surface (27) on a portion of the outer periphery of the plunger (10) on a side of the first large-diameter radially outer surface (26) remote from the insertion end of the plunger (10), the small-diameter radially outer surface (27) having an outer diameter dimension smaller than an outer diameter dimension of the first large-diameter radially outer surface (26); and
a second large-diameter radially outer surface (28) on a portion of the outer periphery of the plunger (10) on a side of the small-diameter radially outer surface (27) remote from the insertion end of the plunger (10), the second large-diameter radially outer surface (28) having an outer diameter dimension equal to the outer diameter dimension of the first large-diameter radially outer surface (26),
wherein the first gap portion (31) is defined between the first large-diameter radially outer surface (26) and the inner periphery of the cylinder (9),
wherein the enlarged gap portion (30) is defined between the small-diameter radially outer surface (27) and the inner periphery of the cylinder (9), and
wherein the second gap portion (32) is defined between the second large-diameter radially outer surface (28) and the inner periphery of the cylinder (9).

13. The chain tensioner according to claim 12, wherein the cylinder-side oil path portion (34) has an oil outlet (37) open to the inner periphery of the cylinder (9), and
wherein the cylinder (9) has, in the inner periphery of the cylinder (9), a circumferential groove (40) arranged such that the oil outlet (37) is entirely located within a range of the circumferential groove (40).

## Patentansprüche

1. Kettenspanner, umfassend:
einen rohrförmigen Zylinder (9), von dem ein axiales Ende ein geschlossenes Ende und das andere axiale Ende ein offenes Ende ist;
einen rohrförmigen Kolben (10), der in axialer Richtung verschiebbar in dem Zylinder (9) eingesetzt ist und ein in den Zylinder (9) eingesetztes offenes Einsetzende und ein aus dem Zylinder (9) vorstehendes geschlossenes vorstehendes Ende aufweist;
eine Trennwand (14), die einen von dem Zylinder (9) und dem Kolben (10) umgebenen Raum axial in (i) eine Druckkammer (15), deren Volumen sich mit axialer Bewegung des Kolbens (10) ändert und (ii) eine Reservoirkammer (16) teilt, deren Volumen unverändert bleibt, selbst wenn sich der Kolben (10) axial bewegt;
einen Ölversorgungsweg (33), durch den von außerhalb des Zylinders (9) zugeführtes Öl in die Reservoirkammer (16) eingeleitet wird;
ein erstes Durchgangsloch (21), das sich axial durch die Trennwand (14) erstreckt;
ein Rückschlagventil (23), welches nur eine Bewegung des Öls von einer Seite des ersten Durchgangslochs (21) nahe der Reservoirkammer (16) zu einer Seite des ersten Durchgangslochs (21) nahe der Druckkammer (15) zulässt;
einen Leckagespalt, der eine Ölleckage von der Druckkammer (15) zulässt, wenn sich der Kolben (10) axial bewegt, so dass das Volumen der Druckkammer (15) abnimmt; und
eine Rückstellfeder (25), die den Kolben (10) in eine Richtung vorspannt, in der der Kolben (10) aus dem Zylinder (9) vorsteht,
wobei der Ölversorgungsweg (33) mit einem Auslassende des Leckagespalts verbunden ist, so dass Öl, welches aus der Druckkammer (15) durch den Leckagespalt durchgesickert ist, zu dem Ölversorgungsweg (33) zurückkehrt,
**dadurch gekennzeichnet, dass** der Kettenspanner ferner umfasst:
ein zweites Durchgangsloch (22), das sich axial durch die Trennwand (14) parallel zu dem ersten Durchgangsloch (21) erstreckt; und
ein Ablassventil (24), das an dem zweiten Durchgangsloch (22) angeordnet ist und konfiguriert ist, Öl von der Druckkammer (15) in die Reservoirkammer (16) abzulassen, wenn ein Druck in der Druckkammer (15) einen vorgegebenen Druck überschreitet,
wobei das erste Durchgangsloch (21) an einer Position ausgebildet ist, die von einer Mitte des Kolbens (10) zu einer von zwei entgegengesetzten Seiten der Mitte des Kolbens (10) versetzt ist, und
wobei das zweite Durchgangsloch (22) an einer Position ausgebildet ist, die von der Mitte des Kolbens (10) zu der anderen der zwei entgegengesetzten Seiten der Mitte des Kolbens (10) versetzt ist.

2. Der Kettenspanner nach Anspruch 1, wobei das zweite Durchgangsloch (22) ein abgesetztes Loch ist, das direkt in der Trennwand (14) ausgebildet ist und einen größeren Durchmesser auf einer Seite der Druckkammer (15) und einen kleineren Durchmesser auf einer Seite der Reservoirkammer (16) aufweist, und
wobei das Ablassventil (24) in dem zweiten Durchgangsloch (22) von einem zweiten ringförmigen Element (80), das eingesetzt und hinsichtlich seiner Position fixiert ist, in einem Endabschnitt des zweiten Durchgangslochs (22) auf der Seite der Druckkammer (15), gehalten wird.

3. Der Kettenspanner nach Anspruch 2, wobei das erste Durchgangsloch (21) ein abgesetztes Loch ist, das direkt in der Trennwand (14) ausgebildet ist und einen größeren Durchmesser auf der Seite der Druckkammer (15) und einen kleineren Durchmesser auf der Seite der Reservoirkammer (16) aufweist, und
wobei das Rückschlagventil (23) in dem ersten Durchgangsloch (21) von einem ersten ringförmigen Element (70), das eingesetzt und hinsichtlich seiner Position fixiert ist, in einem Endabschnitt des ersten Durchgangslochs (21) auf der Seite der Druckkammer (15), gehalten wird.

4. Der Kettenspanner nach Anspruch 2 oder 3, wobei das zweite Durchgangsloch (22) umfasst:
einen zweiten Abschnitt (81) mit kleinem Durchmesser, der einen konstanten Innendurchmesser aufweist und sich von einer Endfläche der Trennwand (14) auf der Seite der Reservoirkammer (16) in Richtung der Druckkammer (15) erstreckt;
eine zweite Stufe (82), die sich radial von dem zweiten Abschnitt (81) mit kleinem Durchmesser in Richtung der Druckkammer (15) ausdehnt; und
einen zweiten Abschnitt (83) mit großem Durchmesser, der sich von der zweiten Stufe (82) in Richtung der Druckkammer (15) erstreckt und einen Innendurchmesser aufweist, der größer als der Innendurchmesser des zweiten Abschnitts (81) mit kleinem Durchmesser ist,
wobei das Rückschlagventil (24) umfasst:
ein zweites Ventilelement (51), das zwischen (i) einer geschlossenen Position, in der sich das zweite Ventilelement (51) in Kontakt mit dem zweiten ringförmigen Element (80) befindet und (ii) einer offenen Position beweglich ist, in der sich das zweite Ventilelement (51) von der geschlossenen Position in Richtung der Reservoirkammer (16) bewegt hat; und
eine zweite Ventilfeder (54), die das zweite Ventilelement (51) von der Seite der Reservoirkammer (16) in Richtung der Druckkammer (15) vorspannt, und
wobei ein Ende der zweiten Ventilfeder (54) nahe der Reservoirkammer (16) von der zweiten Stufe (82) gestützt wird.

5. Der Kettenspanner nach Anspruch 2 oder 3, wobei das zweite Durchgangsloch (22) umfasst:
einen zweiten Abschnitt (81) mit kleinem Durchmesser, der einen konstanten Innendurchmesser aufweist und sich von einer Endfläche der Trennwand (14) auf der Seite der Reservoirkammer (16) in Richtung der Druckkammer (15) erstreckt;
eine zweite Stufe (82), die sich radial von dem zweiten Abschnitt (81) mit kleinem Durchmesser in Richtung der Druckkammer (15) ausdehnt; und
einen zweiten Abschnitt (83) mit großem Durchmesser, der sich von der zweiten Stufe (82) in Richtung der Druckkammer (15) erstreckt und einen Innendurchmesser aufweist, der größer als der Innendurchmesser des zweiten Abschnitts (81) mit kleinem Durchmesser ist,
wobei das Rückschlagventil (24) umfasst:
einen ringförmigen zweiten Ventilsitz (85);
ein zweites Ventilelement (51), das zwischen (i) einer geschlossenen Position, in der sich das zweite Ventilelement (51) in Kontakt mit dem ringförmigen zweiten Ventilsitz (85) befindet und (ii) einer offenen Position beweglich ist, in der sich das zweite Ventilelement (51) von der geschlossenen Position in Richtung der Reservoirkammer (16) bewegt hat;
eine zweite Ventilfeder (54), die das zweite Ventilelement (51) von der Seite der Reservoirkammer (16) in Richtung der Druckkammer (15) vorspannt; und
eine Ventilhülse (86), die als einzelne Baugruppe den zweiten Ventilsitz (85), das zweite Ventilelement (51) und die zweite Ventilfeder (54) hält, und
wobei die Ventilhülse (86) in den zweiten Abschnitt (83) mit großem Durchmesser eingesetzt ist, während sie als einzelne Baugruppe den zweiten Ventilsitz (85), das zweite Ventilelement (51) und die zweite Ventilfeder (54) hält und durch das zweite ringförmige Element (80) verhindert wird, dass die Ventilhülse (86) aus dem zweiten Abschnitt (83) mit großem Durchmesser herausgezogen wird.

6. Der Kettenspanner nach Anspruch 1, wobei das Rückschlagventil (23) umfasst:
ein erstes Ventilelement (41), das konfiguriert ist, das erste Durchgangsloch (21) von einer Seite der Druckkammer (15) zu öffnen und zu schließen; und
eine erste Sitzfläche (42), auf die das erste Ventilelement (51) konfiguriert ist, gesetzt zu werden, um das erste Durchgangsloch (21) zu schließen,
wobei das Rückschlagventil (24) umfasst:
ein zweites Ventilelement (51), das konfiguriert ist, das zweite Durchgangsloch (22) von einer Seite der Reservoirkammer (16) zu öffnen und zu schließen; und
eine zweite Sitzfläche (52), auf die das zweite Ventilelement (51) konfiguriert ist, gesetzt zu werden, um das zweite Durchgangsloch (22) zu schließen, und
wobei die Trennwand (14) ein mit der ersten Sitzfläche (42) und der zweiten Sitzfläche (52) ausgebildetes einstückiges Element ist.

7. Der Kettenspanner nach Anspruch 6, wobei die Trennwand (14) aus Harz oder einer Sintermetall-Legierung gebildet ist.

8. Der Kettenspanner nach Anspruch 6 oder 7, wobei das erste Ventilelement (41) eine sphärische Form aufweist und das zweite Ventilelement (51) eine sphärische Form aufweist.

9. Der Kettenspanner nach einem der Ansprüche 6 bis 8, wobei die erste Sitzfläche (42) an einer Umfangskante einer Endöffnung des ersten Durchgangslochs (21) auf der Seite der Druckkammer (15) ausgebildet ist,
wobei das Rückschlagventil (23) ferner umfasst:
einen ersten Ventilhalter (43), der das erste Ventilelement (41) so hält, dass es zwischen (i) einer geschlossenen Position, in der das erste Ventilelement (41) auf der ersten Sitzfläche (42) sitzt und (ii) einer offenen Position beweglich ist, in der das erste Ventilelement (41) von der ersten Sitzfläche (42) getrennt ist, indem es sich von der geschlossenen Position in Richtung der Druckkammer (15) bewegt; und
eine erste Ventilfeder (44), die das erste Ventilelement (41) von der offenen Position in Richtung der geschlossenen Position vorspannt,
wobei der erste Ventilhalter (43) umfasst:
einen ersten Flanschabschnitt (45), der von einer axialen Endfläche der Trennwand (14) auf der Seite der Druckkammer (15) gestützt wird;
einen ersten rohrförmigen Abschnitt (46), der sich axial von dem ersten Flanschabschnitt (45) in Richtung der Druckkammer (15) erstreckt und in dem das erste Ventilelement (41) axial beweglich aufgenommen ist; und
eine erste Endplatte (47), die an einem axialen Ende des ersten rohrförmigen Abschnitts (46) auf der Seite der Druckkammer (15) angeordnet ist und die erste Ventilfeder (44) stützt,
wobei die zweite Sitzfläche (52) an einer Umfangskante einer Endöffnung des zweiten Durchgangslochs (22) auf der Seite der Reservoirkammer (16) ausgebildet ist,
wobei das Ablassventil (24) ferner umfasst:
einen zweiten Ventilhalter (53), der das zweite Ventilelement (51) so hält, dass es zwischen (i) einer geschlossenen Position, in der das zweite Ventilelement (51) auf der zweiten Sitzfläche (52) sitzt und (ii) einer offenen Position beweglich ist, in der das zweite Ventilelement (51) von der zweiten Sitzfläche (52) getrennt ist, indem es sich von der geschlossenen Position in Richtung der Reservoirkammer (16) bewegt; und
eine zweite Ventilfeder (54), die das zweite Ventilelement (51) von der offenen Position in Richtung der geschlossenen Position vorspannt, und
wobei der zweite Ventilhalter (53) umfasst:
einen zweiten Flanschabschnitt (55), der von einer axialen Endfläche der Trennwand (14) auf der Seite der Reservoirkammer (16) gestützt wird;
einen zweiten rohrförmigen Abschnitt (56), der sich axial von dem zweiten Flanschabschnitt (55) in Richtung der Reservoirkammer (16) erstreckt und in dem das zweite Ventilelement (51) axial beweglich aufgenommen ist; und
eine zweite Endplatte (57), die an einem axialen Ende des zweiten rohrförmigen Abschnitts (56) auf der Seite der Reservoirkammer (16) angeordnet ist und die zweite Ventilfeder (54) stützt.

10. Der Kettenspanner nach einem der Ansprüche 6 bis 8, wobei die erste Sitzfläche (42) an einem Innenumfang des ersten Durchgangslochs (21) ausgebildet ist,
wobei das erste Ventilelement (41) in dem ersten Durchgangsloch (21) so aufgenommen ist, dass es axial zwischen (i) einer geschlossenen Position, in der das erste Ventilelement (41) auf der ersten Sitzfläche (42) sitzt und (ii) einer offenen Position beweglich ist, in der das erste Ventilelement (41) von der ersten Sitzfläche (42) getrennt ist, indem es sich von der geschlossenen Position in Richtung der Druckkammer (15) bewegt,
wobei eine erste Ventilfeder (44) in dem ersten Durchgangsloch (21) angeordnet ist und das erste Ventilelement (41) von der offenen Position in Richtung der geschlossenen Position vorspannt,
wobei ein erstes Federstützelement (62) in einer Endöffnung des ersten Durchgangslochs (21) auf der Seite der Druckkammer (15) angeordnet ist, um die erste Ventilfeder (44) zu stützen,
wobei die zweite Sitzfläche (52) an einem Innenumfang des zweiten Durchgangslochs (22) ausgebildet ist,
wobei das zweite Ventilelement (51) in dem zweiten Durchgangsloch (22) so aufgenommen ist, dass es axial zwischen (i) einer geschlossenen Position, in der das zweite Ventilelement (51) auf der zweiten Sitzfläche (52) sitzt und (ii) einer zweiten geöffneten Ventilposition beweglich ist, in der das zweite Ventilelement (51) von der zweiten Sitzfläche (52) getrennt ist, indem es sich von der geschlossenen Position in Richtung der Reservoirkammer (16) bewegt,
wobei eine zweite Ventilfeder (54) in dem zweiten Durchgangsloch (22) angeordnet ist und das zweite Ventilelement (51) von der offenen Position in Richtung der geschlossenen Position vorspannt, und
wobei ein zweites Federstützelement (64) in einer Endöffnung des zweiten Durchgangslochs (22) auf der Seite der Reservoirkammer (16) angeordnet ist, um die zweite Ventilfeder (54) zu lagern.

11. Der Kettenspanner nach einem der Ansprüche 1 bis 10, wobei die Trennwand (14) so an dem Kolben (10) befestigt ist, dass sie sich gemeinsam mit dem Kolben (10) axial bewegt,
wobei der Leckagespalt ein erster Spaltabschnitt (31) ist, der von einem ringförmigen Spalt, der zwischen einem Außenumfang des Kolbens (10) und einem Innenumfang des Zylinders (9) definiert ist, ein Endabschnitt nahe dem Einsetzende des Kolbens (10) ist,
wobei der Kettenspanner ferner umfasst:
einen vergrößerten Spaltabschnitt (30), der ein Abschnitt des ringförmigen Spalts auf einer Seite des ersten Spaltabschnitts (31) entfernt von dem Einsetzende des Kolbens (10) ist, wobei der vergrößerte Spaltabschnitt (30) eine Spaltabmessung aufweist, die größer als eine Spaltabmessung des ersten Spaltabschnitts (31) ist; und
einen zweiten Spaltabschnitt (32), der ein Abschnitt des ringförmigen Spalts auf einer Seite des vergrößerten Spaltabschnitts (30) entfernt von dem Einsetzende des Kolbens (10) ist, wobei der zweite Spaltabschnitt (32) eine Spaltabmessung aufweist, die kleiner als die Spaltabmessung des vergrößerten Spaltabschnitts (30) ist, und
wobei der Ölversorgungsweg (33) umfasst:
einen zylinderseitigen Ölwegabschnitt (34), der in dem Zylinder (9) ausgebildet ist, so dass von außerhalb des Zylinders (9) zugeführtes Öl in den vergrößerten Spaltabschnitt (30) durch den zylinderseitigen Ölwegabschnitt (34) eingeleitet wird; und
einen kolbenseitigen Ölwegabschnitt (35), der sich durch den rohrförmigen Kolben (10) von dem Außenumfang des Kolbens (10) zu einem Innenumfang des Kolbens (10) so erstreckt, dass der vergrößerte Spaltabschnitt (30) und die Reservoirkammer (16) über den kolbenseitigen Ölwegabschnitt (35) miteinander in Verbindung stehen.

12. Der Kettenspanner nach Anspruch 11, wobei der Kolben (10) aufweist:
eine zylindrische erste radial äußere Fläche (26) mit großem Durchmesser an einem Endabschnitt des Außenumfangs des Kolbens (10) nahe dem Einsetzende des Kolbens (10);
eine radial äußere Fläche (27) mit kleinem Durchmesser an einem Abschnitt des Außenumfangs des Kolbens (10) auf einer Seite der ersten radial äußeren Fläche (26) mit großem Durchmesser entfernt von dem Einsetzende des Kolbens (10), wobei die radial äußere Fläche (27) mit kleinem Durchmesser eine Außendurchmesserabmessung aufweist, die kleiner als eine Außendurchmesserabmessung der ersten radial äußeren Fläche (26) mit großem Durchmesser ist; und
eine zweite radial äußere Fläche (28) mit großem Durchmesser an einem Abschnitt des Außenumfangs des Kolbens (10) auf einer Seite der radial äußeren Fläche (27) mit kleinem Durchmesser entfernt von dem Einsetzende des Kolbens (10), wobei die zweite radial äußere Fläche (28) mit großem Durchmesser eine Außendurchmesserabmessung gleich der Außendurchmesserabmessung der ersten radial äußeren Fläche (26) mit großem Durchmesser aufweist,
wobei der erste Spaltabschnitt (31) zwischen der ersten radial äußeren Fläche (26) mit großem Durchmesser und dem Innenumfang des Zylinders (9) definiert ist,
wobei der vergrößerte Spaltabschnitt (30) zwischen der radial äußeren Fläche (27) mit kleinem Durchmesser und dem Innenumfang des Zylinders (9) definiert ist, und
wobei der zweite Spaltabschnitt (32) zwischen der zweiten radial äußeren Fläche (28) mit großem Durchmesser und dem Innenumfang des Zylinders (9) definiert ist.

13. Der Kettenspanner nach Anspruch 12, wobei der zylinderseitige Ölwegabschnitt (34) einen Ölauslass (37) aufweist, der zu dem Innenumfang des Zylinders (9) offen ist, und
wobei der Zylinder (9) in dem Innenumfang des Zylinders (9) eine Umfangsnut (40) aufweist, die so angeordnet ist, dass der Ölauslass (37) vollständig innerhalb eines Bereichs der Umfangsnut (40) angeordnet ist.

## Revendications

1. Tendeur de chaîne comprenant :
un cylindre tubulaire (9) dont une extrémité axiale est une extrémité fermée et l'autre extrémité axiale est une extrémité ouverte ;
un piston tubulaire (10) inséré axialement de façon coulissante dans le cylindre (9), et ayant une extrémité d'insertion ouverte insérée dans le cylindre (9) et une extrémité protubérante fermée dépassant du cylindre (9) ;
une paroi de séparation (14) qui divise axialement un espace entouré par le cylindre (9) et le piston (10) en (i) une chambre de compression (15) dont le volume change quand le piston (10) se déplace axialement, et (ii) une chambre de réservoir (16) dont le volume reste inchangé même quand le piston (10) se déplace axialement ;
un chemin d'alimentation en huile (33) via lequel l'huile fournie depuis l'extérieur du cylindre (9) est introduite dans la chambre de réservoir (16) ;
un premier trou traversant (21) qui s'étend axialement à travers la paroi de séparation (14) ;
un clapet anti-retour (23) qui permet uniquement un mouvement d'huile d'un côté du premier trou traversant (21) proche de la chambre de réservoir (16) vers un côté du premier trou traversant (21) proche de la chambre de compression (15) ;
un intervalle de fuite qui permet une fuite d'huile de la chambre de compression (15) quand le piston (10) se déplace axialement de telle sorte que le volume de la chambre de compression (15) diminue ; et
un ressort de rappel (25) contraignant le piston (10) dans une direction où le piston (10) ressort du cylindre (9),
dans lequel le chemin d'alimentation en huile (33) est connecté à une extrémité de sortie de l'intervalle de fuite de telle sorte que l'huile qui a fui de la chambre de compression (15) à travers l'intervalle de fuite retourne dans le chemin d'alimentation en huile (33),
**caractérisé en ce que** le tendeur de chaîne comprend en outre :
un deuxième trou traversant (22) qui s'étend axialement à travers la paroi de séparation (14) en parallèle avec le premier trou traversant (21) ; et
une soupape de décharge (24) agencée sur le deuxième trou traversant (22) et configurée pour libérer l'huile de la chambre de compression (15) dans la chambre de réservoir (16) quand la pression dans la chambre de compression (15) dépasse une pression prédéterminée,
dans lequel le premier trou traversant (21) est formé à une position décalée par rapport au centre du piston (10) vers l'un des deux côtés opposés du centre du piston (10), et
dans lequel le deuxième trou traversant (22) est formé à une position décalée par rapport au centre du piston (10) vers l'autre des deux côtés opposés du centre du piston (10).

2. Tendeur de chaîne selon la revendication 1, dans lequel le deuxième trou traversant (22) est un trou échelonné directement formé dans la paroi de séparation (14) et ayant un diamètre plus grand d'un côté de la chambre de compression (15) et un diamètre plus petit d'un côté de la chambre de réservoir (16), et
dans lequel la soupape de décharge (24) est retenue dans le deuxième trou traversant (22) par un deuxième élément annulaire (80) inséré et fixé en position, dans une portion d'extrémité du deuxième trou traversant (22) du côté de la chambre de compression (15).

3. Tendeur de chaîne selon la revendication 2, dans lequel le premier trou traversant (21) est un trou échelonné directement formé dans la paroi de séparation (14) et ayant un diamètre plus grand du côté de la chambre de compression (15) et un diamètre plus petit du côté de la chambre de réservoir (16), et
dans lequel le clapet anti-retour (23) est retenu dans le premier trou traversant (21) par un premier élément annulaire (70) inséré et fixé en position, dans une portion d'extrémité du premier trou traversant (21) du côté de la chambre de compression (15).

4. Tendeur de chaîne selon la revendication 2 ou 3, dans lequel le deuxième trou traversant (22) inclut :
une deuxième portion de petit diamètre (81) ayant un diamètre interne constant et s'étendant depuis une surface d'extrémité de la paroi de séparation (14) du côté de la chambre de réservoir (16) vers la chambre de compression (15) ;
un deuxième échelon (82) qui s'étend radialement depuis la deuxième portion de petit diamètre (81) vers la chambre de compression (15) ; et
une deuxième portion de grand diamètre (83) qui s'étend depuis le deuxième échelon (82) vers la chambre de compression (15) et ayant un diamètre interne supérieur au diamètre interne de la deuxième portion de petit diamètre (81),
dans lequel la soupape de décharge (24) inclut :
un deuxième élément de soupape (51) mobile entre (i) une position fermée où le deuxième élément de soupape (51) est en contact avec le deuxième élément annulaire (80), et (ii) une position ouverte où le deuxième élément de soupape (51) a été déplacé depuis la position fermée vers la chambre de réservoir (16) ; et
un deuxième ressort de soupape (54) contraignant le deuxième élément de soupape (51) depuis le côté de la chambre de réservoir (16) vers la chambre de compression (15), et
dans lequel une extrémité du deuxième ressort de soupape (54) proche de la chambre de réservoir (16) est supportée par le deuxième échelon (82).

5. Tendeur de chaîne selon la revendication 2 ou 3, dans lequel le deuxième trou traversant (22) inclut :
une deuxième portion de petit diamètre (81) ayant un diamètre interne constant et s'étendant depuis une surface d'extrémité de la paroi de séparation (14) du côté de la chambre de réservoir (16) vers la chambre de compression (15) ;
un deuxième échelon (82) qui s'étend radialement depuis la deuxième portion de petit diamètre (81) vers la chambre de compression (15) ; et
une deuxième portion de grand diamètre (83) qui s'étend depuis le deuxième échelon (82) vers la chambre de compression (15) et ayant un diamètre interne supérieur au diamètre interne de la deuxième portion de petit diamètre (81),
dans lequel la soupape de décharge (24) inclut :
un deuxième siège de soupape annulaire (85) ;
un deuxième élément de soupape (51) mobile entre (i) une position fermée où le deuxième élément de soupape (51) est en contact avec le deuxième siège de soupape annulaire (85), et (ii) une position ouverte où le deuxième élément de soupape (51) a été déplacé depuis la position fermée vers la chambre de réservoir (16) ;
un deuxième ressort de soupape (54) contraignant le deuxième élément de soupape (51) depuis le côté de la chambre de réservoir (16) vers la chambre de compression (15) ; et
un manchon de soupape (86) retenant, en un seul ensemble, le deuxième siège de soupape (85), le deuxième élément de soupape (51) et le deuxième ressort de soupape (54), et
dans lequel le manchon de soupape (86) est inséré dans la deuxième portion de grand diamètre (83) tout en retenant, en un seul ensemble, le deuxième siège de soupape (85), le deuxième élément de soupape (51) et le deuxième ressort de soupape (54), et le deuxième élément annulaire (80) empêche une extraction du manchon de soupape (86) hors de la deuxième portion de grand diamètre (83).

6. Tendeur de chaîne selon la revendication 1, dans lequel le clapet anti-retour (23) inclut :
un premier élément de soupape (41) configuré pour ouvrir et fermer le premier trou traversant (21) depuis un côté de la chambre de compression (15) ; et
une première surface de siège (42) sur laquelle le premier élément de soupape (41) est configuré pour être posé afin de fermer le premier trou traversant (21),
dans lequel la soupape de décharge (24) inclut :
un deuxième élément de soupape (51) configuré pour ouvrir et fermer le deuxième trou traversant (22) depuis un côté de la chambre de réservoir (16) ; et
une deuxième surface de siège (52) sur laquelle le deuxième élément de soupape (51) est configuré pour être posé afin de fermer le deuxième trou traversant (22), et
dans lequel la paroi de séparation (14) est un élément intégré formé avec la première surface de siège (42) et la deuxième surface de siège (52).

7. Tendeur de chaîne selon la revendication 6, dans lequel la paroi de séparation (14) est constituée d'une résine ou d'un alliage fritté.

8. Tendeur de chaîne selon la revendication 6 ou 7, dans lequel le premier élément de soupape (41) présente une forme sphérique et le deuxième élément de soupape (51) présente une forme sphérique.

9. Tendeur de chaîne selon l'une quelconque des revendications 6 à 8, dans lequel la première surface de siège (42) est formée sur un bord périphérique d'une ouverture d'extrémité du premier trou traversant (21) du côté de la chambre de compression (15),
dans lequel le clapet anti-retour (23) inclut en outre :
une première pièce de retenue de soupape (43) retenant le premier élément de soupape (41) de manière à ce qu'il soit mobile entre (i) une position fermée où le premier élément de soupape (41) est posé sur la première surface de siège (42), et (ii) une position ouverte où le premier élément de soupape (41) est séparé de la première surface de siège (42) en se déplaçant depuis la position fermée vers la chambre de compression (15) ; et
un premier ressort de soupape (44) contraignant le premier élément de soupape (41) depuis la position ouverte vers la position fermée,
dans lequel la première pièce de retenue de soupape (43) comprend :
une première portion de bride (45) supportée par une surface d'extrémité axiale de la paroi de séparation (14) du côté de la chambre de compression (15) ;
une première portion tubulaire (46) qui s'étend axialement depuis la première portion de bride (45) vers la chambre de compression (15), et où le premier élément de soupape (41) est reçu de manière axialement mobile ; et
une première plaque d'extrémité (47) disposée à une extrémité axiale de la première portion tubulaire (46) du côté de la chambre de compression (15), et supportant le premier ressort de soupape (44),
dans lequel la deuxième surface de siège (52) est formée sur un bord périphérique d'une ouverture d'extrémité du deuxième trou traversant (22) du côté de la chambre de réservoir (16),
dans lequel la soupape de décharge (24) inclut en outre :
une deuxième pièce de retenue de soupape (53) retenant le deuxième élément de soupape (51) de manière à ce qu'il soit mobile entre (i) une position fermée où le deuxième élément de soupape (51) est posé sur la deuxième surface de siège (52), et (ii) une position ouverte où le deuxième élément de soupape (51) est séparé de la deuxième surface de siège (52) en se déplaçant depuis la position fermée vers la chambre de réservoir (16) ; et
un deuxième ressort de soupape (54) contraignant le deuxième élément de soupape (51) depuis la position ouverte vers la position fermée, et
dans lequel la deuxième pièce de retenue de soupape (53) comprend :
une deuxième portion de bride (55) supportée par une surface d'extrémité axiale de la paroi de séparation (14) du côté de la chambre de réservoir (16) ;
une deuxième portion tubulaire (56) qui s'étend axialement depuis la deuxième portion de bride (55) vers la chambre de réservoir (16), et où le deuxième élément de soupape (51) est reçu de manière axialement mobile ; et
une deuxième plaque d'extrémité (57) disposée à une extrémité axiale de la deuxième portion tubulaire (56) du côté de la chambre de réservoir (16) et supportant le deuxième ressort de soupape (54).

10. Tendeur de chaîne selon l'une quelconque des revendications 6 à 8, dans lequel la première surface de siège (42) est formée sur une périphérie interne du premier trou traversant (21),
dans lequel le premier élément de soupape (41) est reçu dans le premier trou traversant (21) de manière à ce qu'il soit axialement mobile entre (i) une position fermée où le premier élément de soupape (41) est posé sur la première surface de siège (42), et (ii) une position ouverte où le premier élément de soupape (41) est séparé de la première surface de siège (42) en se déplaçant depuis la position fermée vers la chambre de compression (15),
dans lequel un premier ressort de soupape (44) est disposé dans le premier trou traversant (21) et contraint le premier élément de soupape (41) depuis la position ouverte vers la position fermée,
dans lequel un premier élément de support de ressort (62) est disposé dans une ouverture d'extrémité du premier trou traversant (21) du côté de la chambre de compression (15) pour supporter le premier ressort de soupape (44),
dans lequel la deuxième surface de siège (52) est formée sur une périphérie interne du deuxième trou traversant (22),
dans lequel le deuxième élément de soupape (51) est reçu dans le deuxième trou traversant (22) de manière à ce qu'il soit axialement mobile entre (i) une position fermée où le deuxième élément de soupape (51) est posé sur la deuxième surface de siège (52), et (ii) une deuxième position de soupape ouverte où le deuxième élément de soupape (51) est séparé de la deuxième surface de siège (52) en se déplaçant depuis la position fermée vers la chambre de réservoir (16),
dans lequel un deuxième ressort de soupape (54) est disposé dans le deuxième trou traversant (22) et contraint le deuxième élément de soupape (51) depuis la position ouverte vers la position fermée, et
dans lequel un deuxième élément de support de ressort (64) est disposé dans une ouverture d'extrémité du deuxième trou traversant (22) du côté de la chambre de réservoir (16) pour supporter le deuxième ressort de soupape (54).

11. Tendeur de chaîne selon l'une quelconque des revendications 1 à 10, dans lequel la paroi de séparation (14) est fixée au piston (10) de manière à se déplacer axialement conjointement au piston (10),
dans lequel l'intervalle de fuite est une première portion d'intervalle (31) d'un intervalle annulaire, défini entre une périphérie externe du piston (10) et une périphérie interne du cylindre (9), qui est une portion d'extrémité proche de l'extrémité d'insertion du piston (10),
dans lequel le tendeur de chaîne comprend en outre :
une portion d'intervalle agrandie (30) qui est une portion de l'intervalle annulaire sur un côté de la première portion d'intervalle (31) distant de l'extrémité d'insertion du piston (10), la portion d'intervalle agrandie (30) ayant une dimension d'intervalle supérieure à une dimension d'intervalle de la première portion d'intervalle (31) ; et
une deuxième portion d'intervalle (32) qui est une portion de l'intervalle annulaire sur un côté de la portion d'intervalle agrandie (30) distant de l'extrémité d'insertion du piston (10), la deuxième portion d'intervalle (32) ayant une dimension d'intervalle inférieure à la dimension d'intervalle de la portion d'intervalle agrandie (30), et
dans lequel le chemin d'alimentation en huile (33) comprend :
une portion de chemin d'huile côté cylindre (34) formée dans le cylindre (9) de telle sorte que l'huile fournie depuis l'extérieur du cylindre (9) est introduite dans la portion d'intervalle agrandie (30) à travers la portion de chemin d'huile côté cylindre (34) ; et
une portion de chemin d'huile côté piston (35) qui s'étend à travers le piston tubulaire (10) depuis la périphérie externe du piston (10) jusqu'à une périphérie interne du piston (10) de telle sorte que la portion d'intervalle agrandie (30) et la chambre de réservoir (16) communiquent l'une avec l'autre via la portion de chemin d'huile côté piston (35).

12. Tendeur de chaîne selon la revendication 11, dans lequel le piston (10) comporte :
une première surface radialement externe cylindrique de grand diamètre (26) sur une portion d'extrémité de la périphérie externe du piston (10) proche de l'extrémité d'insertion du piston (10) ;
une surface radialement externe de petit diamètre (27) sur une portion de la périphérie externe du piston (10) sur un côté de la première surface radialement externe de grand diamètre (26) distant de l'extrémité d'insertion du piston (10), la surface radialement externe de petit diamètre (27) ayant une dimension de diamètre externe inférieure à une dimension de diamètre externe de la première surface radialement externe de grand diamètre (26) ; et
une deuxième surface radialement externe de grand diamètre (28) sur une portion de la périphérie externe du piston (10) sur un côté de la surface radialement externe de petit diamètre (27) distant de l'extrémité d'insertion du piston (10), la deuxième surface radialement externe de grand diamètre (28) ayant une dimension de diamètre externe égale à la dimension de diamètre externe de la première surface radialement externe de grand diamètre (26),
dans lequel la première portion d'intervalle (31) est définie entre la première surface radialement externe de grand diamètre (26) et la périphérie interne du cylindre (9),
dans lequel la portion d'intervalle agrandie (30) est définie entre la surface radialement externe de petit diamètre (27) et la périphérie interne du cylindre (9), et
dans lequel la deuxième portion d'intervalle (32) est définie entre la deuxième surface radialement externe de grand diamètre (28) et la périphérie interne du cylindre (9).

13. Tendeur de chaîne selon la revendication 12, dans lequel la portion de chemin d'huile côté cylindre (34) comporte une sortie d'huile (37) ouverte vers la périphérie interne du cylindre (9), et
dans lequel le cylindre (9) comporte, dans la périphérie interne du cylindre (9), une rainure circonférentielle (40) agencée de telle sorte que la sortie d'huile (37) est entièrement située dans une plage de la rainure circonférentielle (40).
